# EUROPEAN PATENT APPLICATION

(11) **EP 3 072 997 A1**
(43) Date of publication of application: **28.09.2016**
(21) Application number: 14863472.8
(22) Date of filing: 26.02.2014
(51) Int. Cl.: D01D 5/00, D01D 4/00, D01D 13/00

(54) **ELECTROSPINNING DEVICE FOR MANUFACTURING NANOFIBER**

(30) Priority: 21.11.2013 KR 20130142272; 21.11.2013 KR 20130142273; 21.11.2013 KR 20130142278
(71) Applicant: Finetex Ene, Inc., Seoul 137-819 (KR)
(72) Inventor: PARK, Jong-Chul, Seoul 140-774 (KR)
(74) Representative: v. Bezold & Partner Patentanwälte - PartG mbB
(86) International application number: PCT/KR2014/001582
(87) International publication number: WO 2015/076460

(57) **Abstract**

The present invention relates to an electrospinning device for manufacturing a nanofiber, and the purpose of the present invention is to provide an electrospinning device for manufacturing a nanofiber, wherein a substrate is transferred while a nanofiber web is stacked and formed on a side surface of the substrate through electrospinning of a polymer spinning solution, and the substrate is rotated during transfer such that the nanofiber web is stacked and formed on the other side surface; accordingly, the nanofiber web can be stacked and formed on both surfaces of the substrate through a single manufacturing process; a drying process is performed simultaneously during rotation of the substrate such that, at the same time the nanofiber web is stacked on both surfaces of the substrate, the substrate is dried through a single manufacturing process, thereby removing any solvent remaining on the nanofiber web; and, as electrospinning devices, electro-blown electrospinning devices and electro-spinning electrospinning devices are installed alternately, such that electro-spinning electrospinning and electro-blown electrospinning can be performed alternately with regard to a transferred substrate.

## Description

### Technical Field

The present invention relates to an electrospinning apparatus. More particularly, polymer spinning solution is electrospun onto a substrate and nanofiber web is laminated on a substrate, wherein a substrate is transferred while a nanofiber web is stacked and formed on a side surface of the substrate through electrospinning of a polymer spinning solution, and the substrate is rotated during transfer such that the nanofiber web is stacked and formed on the other side surface. Accordingly, the nanofiber web can be stacked and formed on both surfaces of the substrate through a single manufacturing process. Moreover a drying process is performed simultaneously during rotation of the substrate such that, at the same time the nanofiber web is stacked on both surfaces of the substrate, the substrate is dried through a single manufacturing process, thereby removing any solvent remaining on the nanofiber web; and, as electrospinning devices, electro-blown electrospinning devices and electro-spinning electrospinning devices are installed alternately, such that electro-spinning electrospinning and electro-blown electrospinning can be performed alternately with regard to a transferred substrate.

### Background Art

Generally, a filter is a filtering medium which filters out foreign matter in fluid, and comprises a liquid filter and an air filter.

An air filter is used for prevention of defective high-tech products along with high-tech industry development. An air filter eliminates biologically harmful things such as dust in air, particles, bio particles such as virus and mold, bacteria, etc. An air filter is applied in various fields such as production of semiconductor, assembly of computing device, hospital, food processing plant, food and agriculture field, and also widely used in workplace generating a lot of dust, and thermoelectric power plant.

Gas turbine used in thermal power plant intakes purified air from outside, compresses it, injects compressed air with fuel to combustion burner, mixes them, combusts mixed air and fuel, obtains high temperature and high pressure combustion gas, injects the high temperature and high pressure combustion gas to vane of turbine, and attains rotatory power.

Since the gas turbine comprises very precise components, periodic planned preventive maintenance is performed, and wherein the air filter is used for pretreatment to purify air in the atmosphere which inflows to a compressor.

Here, when an air filter adopts air for combustion intaken to gas turbine, it stops from permeating foreign substances in atmosphere such as dust into a filter medium, and provides purified air.

However, particles with larger particle size form Filter Cake on the surface of the filter medium. Also, fine particles gradually accumulate in the filter medium, and block pores of the filter medium.

Eventually, when particles accumulate on the surface of filter medium, it increases pressure loss of a filter, and declines sustainability of a filter.

Meanwhile, conventional air filter provides static electricity to fiber-assembly comprising a filter medium, and measures efficiency according to the principle collecting by electrostatic force. However, the European standard for air filters, EN779, revised to eliminate efficiency of filter by static electricity effect in 2012 and revealed that conventional filter actual efficiency decreases 20% or more.

In order to solve the problems stated above, various methods which apply to filter by producing nanosized fiber have been developed and used.

When applying nanofiber to filter, compared to conventional filter medium having large diameter, specific-surface area is very large, flexibility of surface functionality is good, having nanosized pores, and harmful fine particles are effectively eliminated.

However, manufacture of filter using nanofiber has problems such as increasing production cost, difficulty in adjusting various conditions for production, difficulty in mass-production, and filter using nanofiber could not be produced and distributed in relatively low unit cost.

Also, since conventional technology of spinning nanofiber is limited to small scale production line concentrating on laboratory, technology of dividing spinning section and spinning nanofiber as unit concept is required.

Meanwhile, conventional electrospinning apparatus produces nanofiber by electrospinning polymer spinning solution on one side of a substrate provided from the outside and laminating forming nanofiber web. In other words, conventional electrospinning apparatus comprises a bottom-up electrospinning apparatus or a top-down electrospinning apparatus, and electrospinning spinning solution on lower side or upper side of a substrate provided to an electrospinning apparatus, laminating forming nanofiber web, and produces nanofiber web.

As described above, the electrospinning apparatus comprises a bottom-up electrospinning apparatus or a top-down electrospinning apparatus, electrospun spinning solution on upper side or lower side of a substrate which is provided from the outside and carried in predetermined direction, and produces nanofiber laminating formed nanofiber web or nanofiber filter.

However, the bottom-up electrospinning apparatus or the top-down electrospinning apparatus electrospins spinning solution only on upper side or lower side of a substrate, and laminates nanofiber web, and there is a problem such as it cannot laminate nanofiber web by electrospinning on both sides of a substrate.

Because of this, in case of nanofiber laminating formed nanofiber web by electrospinning polymer spinning solution on both sides of a substrate or nanofiber filter is required, through a bottom-up electrospinning apparatus or a top-down electrospinning apparatus, spinning solution is electrospun on top or bottom, produces nanofiber web on the substrate, flipping produced substrate, once again provided to a bottom-up electrospinning apparatus or a top-down electrospinning apparatus, electrospinning spinning solution on another side which not laminating formed nanofiber web, and produces nanofiber laminating formed nanofiber web on both sides of a substrate or a nanofiber filter, and there is problem such as manufacturing process is complicated when producing substrate laminating formed nanofiber web on both sides.

Generally, Nano Fiber refers to a Micro Fiber having an average diameter of tens to hundreds nm, products comprising nanofiber such as non-woven fabric, membrane, and braid are widely used as consumer goods, agricultural, clothing, and industrial ways.

Moreover, nanofiber is used in various fields such as artificial leather, suedette, sanitary pads, clothing, diapers, packing materials, general goods materials, various filter materials, medical use materials in gene transporting, bulletproof jacket, and other national defense use materials. As stated above, nanofiber is produced by electric field. In other words, high voltage flows in electric field to polymer material of raw material and occurs repulsive force in inner side of polymer material of raw material, so molecular agglomerate, split into nano size thread, and nanofiber is produced.

In this case, as stronger electric field is, polymer substance can be thinly torn, 10 to 1000nm thickness of nanofiber can be obtained.

As described above, the electrospinning apparatus producing nanofiber comprises an electro-blown electrospinning apparatus and an electro-spinning electrospinning apparatus.

Here, the electro-blown electrospinning apparatus when electrospinning polymer spinning solution simultaneously jets polymer spinning solution and compressed air, and the electro-spinning electrospinning apparatus comprises a structure of electrospinning polymer spinning solution.

In this case, the electro-blown electrospinning apparatus is capable of producing nanofiber web having relatively thick diameter through electrospun polymer spinning solution, and the electro-spinning electrospinning apparatus is capable of producing nanofiber web having relatively thin diameter through electrospun polymer spinning solution.

Because of this, in manufacture of nanofiber web with relatively thick diameter, an electro-blown electrospinning apparatus is applied, and in manufacture of nanofiber web with thin diameter, an electro-spinning electrospinning apparatus is applied, and produces nanofiber or nanofiber filter.

Meanwhile, through an electro-blown electrospinning apparatus which produces nanofiber web with thick diameter or an electro-spinning electrospinning apparatus which produces nanofiber web with thin diameter, in the case of producing nanofiber or nanofiber filter by laminating relatively thin diameter or thick diameter nanofiber web on thick diameter nanofiber web or thin diameter nanofiber web, by adjusting voltage intensity provided to the electro-blown electrospinning apparatus or the electro-spinning electrospinning apparatus, and forms diameter of nanofiber web electrospun and laminating formed polymer spinning solution thin or thick.

However, as described above, in the case of laminating nanofiber web with relatively thin diameter or thick diameter on nanofiber web with thick diameter or thin diameter, there are problems such as it is needed to adjust provided voltage intensity.

In order to solve the problem as stated above, in the case of laminating nanofiber web of thin diameter on nanofiber web of thick diameter, through an electro-blown electrospinning apparatus, laminating forming nanofiber web of thick diameter, and on nanofiber web of thick diameter, through an electro-spinning electrospinning apparatus, laminating forming nanofiber web of thin diameter, and produces nanofiber or nanofiber filter, and in the case of laminating nanofiber web of thick diameter on nanofiber web of thin diameter, through an electro-spinning electrospinning apparatus, laminating forming nanofiber web of thin diameter, and on nanofiber web of thin diameter, through an electro-blown electrospinning apparatus, laminating nanofiber web of thick diameter, and produces nanofiber or nanofiber filter, through the electro-blown electrospinning apparatus or the electro-spinning electrospinning apparatus, laminating nanofiber web of thick diameter or nanofiber web of thin diameter, and again laminating forming nanofiber web of thin diameter or nanofiber web of thick diameter on laminated nanofiber web, and there are problems such as manufacturing process of nanofiber or nanofiber filter is inconvenient and complicated.

Moreover, as described above, in order to produce nanofiber or nanofiber filter having various diameters and laminating formed a plurality of layers, an electro-blown electrospinning apparatus and electro-spinning electrospinning apparatus are all required, and because of this, there are problems such as device cost, manufacturing cost, and product cost increase and mass production of nanofiber or nanofiber filter is difficult due to complicated manufacturing process.

Meanwhile, nanofiber or nanofiber filter mass production and continuous production are possible, and an electrospinning apparatus not only having electrical stability but also is capable of producing various materials, diameters, and types of nanofiber or nanofiber filter is required, because feature of each nanofiber or nanofiber filter produced through an electrospinning apparatus is different, products having various features according to the final product are required.

### Disclosure

### Technical Problem

The present invention is contrived to solve the problems, the present invention is directed to providing an electrospinning apparatus for producing nanofiber which electrospun polymer spinning solution, laminating formed nanofiber web on one side, rotating carried substrate, laminating formed nanofiber web on another side, capable of laminating forming nanofiber web on both sides of substrate through manufacturing process, simultaneously performing drying process during rotation of substrate, laminating nanofiber web on both sides of substrate through one manufacturing process, simultaneously drying substrate and removing residual solvent in nanofiber web, alternately installing electro-blown electrospinning apparatus and electro-spinning electrospinning apparatus, and alternately performing electro-blown electrospinning apparatus and electro-spinning electrospinning apparatus to carried substrate.

Moreover, the present invention provides an electrospinning apparatus for producing nanofiber which can be applied to both a bottom-up electrospinning apparatus and a top-down electrospinning apparatus, in manufacturing process of laminating forming nanofiber web, upper and lower side of a substrate are rotated 180° and reversed, capable of electrospinning polymer spinning solution to both sides of substrate, flip device which rotates substrate is formed in "U" form, each unit is installed and located in overlapping direction, space use is facilitated when installing an electrospinning apparatus, polymer spinning solution is electrospun on both sides, capable of drying carried substrate, the whole composition and the whole process can be simplified and manufacturing cost can be reduced.

In addition, the present invention provides an electrospinning apparatus for producing nanofiber in which by introducing unit concept to an electrospinning apparatus, electrospinning the same or different kinds of polymer spinning solution on a substrate in each unit, laminating forming nanofiber web, capable of mass-producing nanofiber and nanofiber filter, alternately installed electro-blown electrospinning apparatus and electro-spinning electrospinning apparatus, electrospinning different kinds of polymer, laminating nanofiber web of the same or different diameter, capable of electrospinning nanofiber web having different diameter, because of this, capable of producing nanofiber or nanofiber filter of various materials and diameters, capable of laminating forming nanofiber web of different diameter without difference in voltage intensity, and electro-blown electrospinning apparatus and electro-spinning electrospinning apparatus are simultaneously applied to one process, and capable of producing complementary and advanced nanofiber or nanofiber filter.

### Technical Solution

In order to achieve the objects of the present invention, according to a preferred embodiment of the present invention, an electrospinning apparatus for production of nanofibers, comprising: units are sequentially installed in several and comprising a spinning solution main tank which is provided filled polymer spinning solution, a nozzle block which is installed inside of a case for jetting polymer spinning solution filled in the spinning solution main tank and arranged and installed a plurality of nozzle in pin form for laminating forming nanofiber web on a substrate provided from outside, a collector separated in predetermined space from a nozzle for integrating polymer spinning solution jetted from nozzle of the nozzle block, a voltage generator generating voltage to the collector, and an auxiliary carry device for carrying a substrate; and a flip device which is provided between units in middle among each unit and rotates a substrate carried from the front-end to the rear-end.

Preferably, an embodiment of the present invention further comprising: an overflow device including a spinning solution recovery path for retrieving overflowed polymer spinning solution from a nozzle block of each of the unit, a recycled tank connected to the spinning solution recovery path and stores retrieved polymer spinning solution, a middle tank connected to the recycled tank and a spinning solution main tank with a feed pipe and carrying polymer spinning solution, and wherein polymer spinning solution is supplied from the middle tank to a nozzle block through a supply pipe. Alternatively, an embodiment of the present invention further comprising: a VOC recycling device including a condensation device for condensing and liquefying VOC generated from each of the unit, a distillation device which distills and liquefies VOC condensed and liquefied through the condensation device, and a storage device for storing solvent liquefied from a distillation device, and wherein solvents in a storage tank which VOC liquefied and distilled from a distillation device is classified and stored reuse and recycle as polymer spinning solution.

Here, top of the case is formed with an electric insulator and the bottom of the case is formed with an electric conductor, and top and bottom of the case are mutually combined.

Meanwhile, an embodiment of the present invention further comprises a thickness measuring device which is installed in the rear-end of each of the unit, measures thickness of nanofiber web jetted on a substrate carried by ultrasonic waves, adjusts feed speed of a substrate and voltage intensity of a voltage generator according to thickness of measured nanofiber web, and adjusts thickness of nanofiber web.

In this case, an embodiment of the present invention further comprises a permeability measuring device which is provided in the lowermost among each unit, measures permeability of nanofiber web jetted on a substrate by ultrasonic waves, adjusts feed speed of a substrate and voltage intensity of a voltage generator according to permeability of measured nanofiber web, and adjusts permeability of nanofiber web.

In addition, an embodiment of the present invention further comprises a substrate feed speed adjusting device including a buffer section formed between each of the unit, a pair of support roller supporting a substrate on the buffer section, and one or more adjusting roller which is installed movable up and down between a pair of the support roller and a substrate is wound on, and wherein adjusts feed speed of a substrate according to vertical motion of each of the adjusting roller.

Moreover, an embodiment of the present invention further comprises a temperature adjusting control device which is formed in spiral form to inner peripheral edge of each pipe of the nozzle block, formed in heating line form, and adjusts temperature of polymer spinning solution provided to a pipe.

Meanwhile, a flip device is formed approximately in "U" form, and is cylindrical form having a hollow inside, is projected inwardly on both sides of inner peripheral edge, and includes right and left guide member having guide-groove for guided in spiral form and inserted both sides of a substrate.

In this case, among the right and left guide member, a left guide member is extended and formed in upper direction following inner peripheral edge, again is extended and formed in lower direction, and is extended and formed in spiral form to the initial direction of a right guide member, and the right guide member is extended and formed in lower direction following inner peripheral edge, again is extended and formed in upper direction, and is extended and formed in spiral form to the initial direction of the left guide member, and a substrate inserted to each of the right and left side guide groove is guided to right and left guide member and rotated in 180°, the bottom is located in top and the top is located in bottom.

Here, the flip device further comprising a drying device for supplying heat air, hot air, or steam.

Meanwhile, each of the units comprises a unit provided with an electro-blown electrospinning apparatus and a unit provided with electro-spinning electrospinning apparatus, and units comprising the electro-blown electrospinning apparatus and units comprising the electro-spinning electrospinning apparatus are sequentially and alternately installed each other.

In this case, from inner pipe provided a plurality of pipes arranged and installed in a nozzle bock of unit comprising the electro-blown electrospinning apparatus, polymer spinning solution is electrospun, simultaneously compressed air is jetted from outer pipe provided in outer side, and from each nozzle of a plurality of pipe arranged and installed in nozzle block of a unit comprising the electro-spinning electrospinning apparatus, polymer spinning solution is electrospun.

Also, from each nozzle of a unit comprising an electro-blown electrospinning apparatus, a nanofiber web of thick diameter is laminated on the substrate, from each nozzle of a unit comprising the electro-spinning electrospinning apparatus, a nanofiber web of thin diameter laminated is laminated on nanofiber web of thick diameter, and the laminating process is alternately repeated.

### Advantageous Effects

The present invention having the composition as described above, by rotating substrate laminating formed nanofiber web, capable of laminating forming nanofiber web on both sides of substrate through one manufacturing process, and by drying substrate during rotation, capable of removing residual solvent in nanofiber web, applicable to a bottom-up electrospinning apparatus and a top-down electrospinning apparatus, and because of this, there are effects such as manufacturing process of nanofiber or nanofiber filter is simplified and manufacturing cost is reduced.

Also, the present invention applies the electrospinning apparatus as unit concept, by mutually connecting a plurality of unit and producing nanofiber or nanofiber filter, in each unit, on substrate, capable of consecutively electrospinning the same or different kinds of polymer spinning solution, because of this, capable of laminating forming nanofiber web comprising the same or different kinds on substrate, capable of producing nanofiber or nanofiber filter having required material and form in the field and various features, and by forming a flip device which rotates substrate in "U" form and each unit of the electrospinning apparatus is installed and located in overlapping direction, facilitating space use in installation of electrospinning apparatus and simultaneously having enough space for installation, and because of this, an electrospinning apparatus can be installed and operated in small space, capable of producing nanofiber and nanofiber filter having high filtering efficiency and low pressure drop, and capable of mass production of nanofiber or nanofiber filter.

Moreover, the present invention alternately installed an electro-blown electrospinning apparatus and an electro-spinning electrospinning apparatus, capable of laminating forming nanofiber web having different diameters and simultaneously capable of electrospinning polymer spinning solution of different kinds, because of this, it is possible to produce nanofiber or nanofiber filter having various diameters and matters, and as electro-blown electrospinnign apparatus and electro-spinning electrospinning apparatus are simultaneously applied to one process, it is possible to produce complementary and advanced nanofiber or nanofiber filter, and manufacturing process of nanofiber or nanofiber filter is simplified, capable of laminating forming nanofiber web having different diameters without difference in voltage intensity, reduces device cost, manufacturing cost, and product cost, capable of mass-producing nanofiber or nanofiber filter, and has electrical stability.

### Brief Description of the Drawings

FIG. 1 schematically shows a side view of an electrospinning apparatus according to an exemplary embodiment of the present invention.
FIG. 2 schematically illustrates a top plan view of a nozzle block installed in each unit of the electrospinning apparatus according to an exemplary embodiment of the present invention.
FIG. 3 schematically illustrates a front end view of a heat transfer device in a nozzle block installed in each unit of the electrospinning apparatus according to an exemplary embodiment of the present invention.
FIG. 4 is a cross-sectional view of A-A' line according to an exemplary embodiment of the present invention.
FIG. 5 schematically shows an auxiliary carry device of the electrospinning apparatus according to an exemplary embodiment of the present invention.
FIG. 6 schematically shows an auxiliary belt roller of an auxiliary carry device of the electrospinning apparatus according to another exemplary embodiment of the present invention.
FIG. 7 to FIG. 10 schematically illustrates a side view of operation process of a substrate feed speed adjusting device of the electrospinning apparatus according to an exemplary embodiment of the present invention.
FIG. 11 schematically shows a perspective view of a flip device of the electrospinning apparatus according to an exemplary embodiment of the present invention.
FIG. 12 is a cross-sectional view of B-B'line according to an exemplary embodiment of the present invention.
FIG. 13 is a cross-sectional view of C-C'line according to an exemplary embodiment of the present invention.
FIG. 14 is a cross-sectional view of D-D' line according to an exemplary embodiment of the present invention.
FIG. 15 is a cross-sectional view of E-E'line according to an exemplary embodiment of the present invention.
FIG. 16 schematically shows a side view of an electrospinning apparatus according to an exemplary embodiment of the present invention.
FIG. 17 schematically shows a top plan view of an electrospinning apparatus according to an exemplary embodiment of the present invention.
FIG. 18 schematically shows a flip device of the electrospinning apparatus according to an exemplary embodiment of the present invention.
FIG. 19 is a cross-sectional view of F-F'line according to an exemplary embodiment of the present invention.
FIG. 20 is a cross-sectional view of G-G' line according to an exemplary embodiment of the present invention.
FIG. 21 is a cross-sectional view of H-H' line according to an exemplary embodiment of the present invention.
FIG. 22 is a cross-sectional view of I-I' line according to an exemplary embodiment of the present invention.
FIG. 23 schematically illustrates a top plan view of an electro-blown electrospinning apparatus installed in unit of the electrospinning apparatus according to an embodiment of the present invention.
FIG. 24 schematically illustrates a side view of an electro-blown electrospinning apparatus installed in unit of the electrospinning apparatus according to an embodiment of the present invention.
FIG. 25 schematically illustrates a top plan view of an electro-spinning electrospinning apparatus installed in unit of the electrospinning apparatus according to an embodiment of the present invention.
FIG. 26 schematically illustrates a top plan view of an electro-spinning electrospinning apparatus installed in unit of the electrospinning apparatus according to an embodiment of the present invention.

### Description of Reference Numbers of Drawings

- 1:: electrospinning apparatus,
- 3:: supply roller,
- 5:: winding roller,
- 7:: main control device,
- 8:: spinning solution main tank,
- 10a, 10b, 10c, 10d:: unit,
- 11, 11a, 11b:: nozzle block,
- 12:: nozzle,
- 13:: collector,
- 14, 14a, 14b, 14c, 14d:: voltage generator,
- 15, 15a, 15b:: substrate,
- 16:: auxiliary carry device,
- 16a:: auxiliary belt,
- 16b:: auxiliary belt roller,
- 18:: case,
- 19:: insulation member,
- 21, 25 :: supply pipe,
- 23, 27:: valve,
- 30:: substrate feed speed adjusting device,
- 31:: buffer section,
- 33, 33':: support roller,
- 35:: adjusting roller,
- 40:: pipe,
- 41:: heating line,
- 60:: temperature adjusting control device,
- 70:: thickness measuring device,
- 80:: permeability measuring device,
- 90:: laminating device,
- 110:: flip device,
- 111:: left side guide member,
- 111':: right side guide member,
- 112, 112':: guide groove,
- 120:: drying device,
- 200:: overflow device,
- 211, 231:: agitation device,
- 212, 213, 214, 233:: valve,
- 216:: second feed pipe,
- 218:: second feed control device,
- 220:: middle tank,
- 222:: second sensor,
- 230:: recycled tank,
- 232:: first sensor,
- 240:: supply pipe,
- 242:: supply control valve,
- 250:: spinning solution recovery path,
- 251:: first feed pipe,
- 300:: VOC recycling device,
- 310:: condensation device,
- 311, 321, 331, 332:: pipe,
- 320:: distillation device,
- 330:: solvent storage device,

### Detailed Description of the Preferred Embodiments

While this invention has been described in connection with what is presently considered to be practical exemplary embodiments, it is to be understood that the invention is not limited to the disclosed embodiments, but, on the contrary, is intended to cover various modifications and equivalent arrangements included within the spirit and scope of the appended claims.

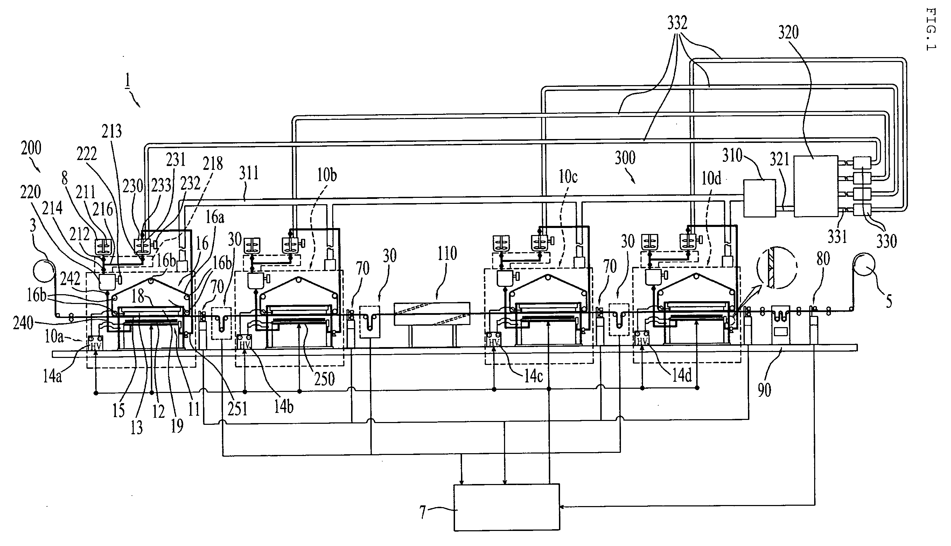

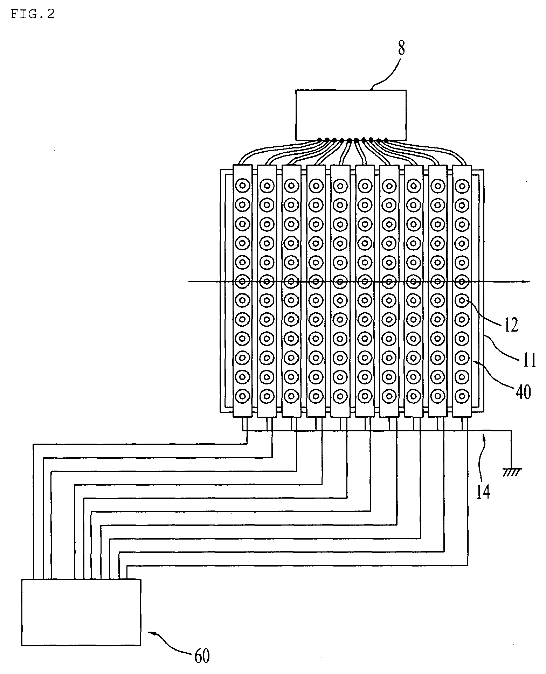

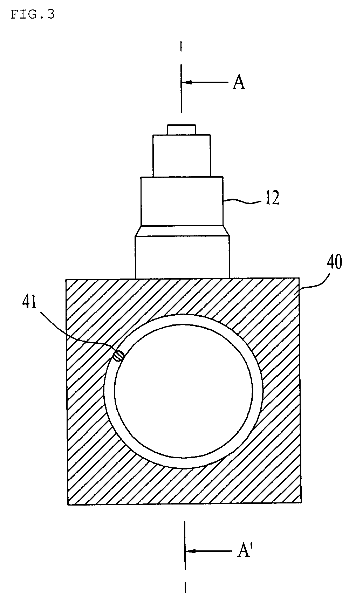

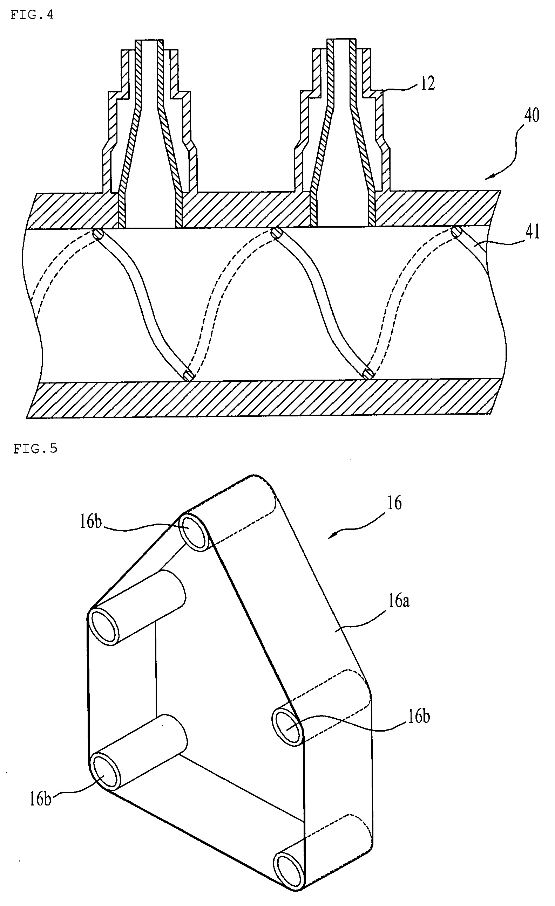

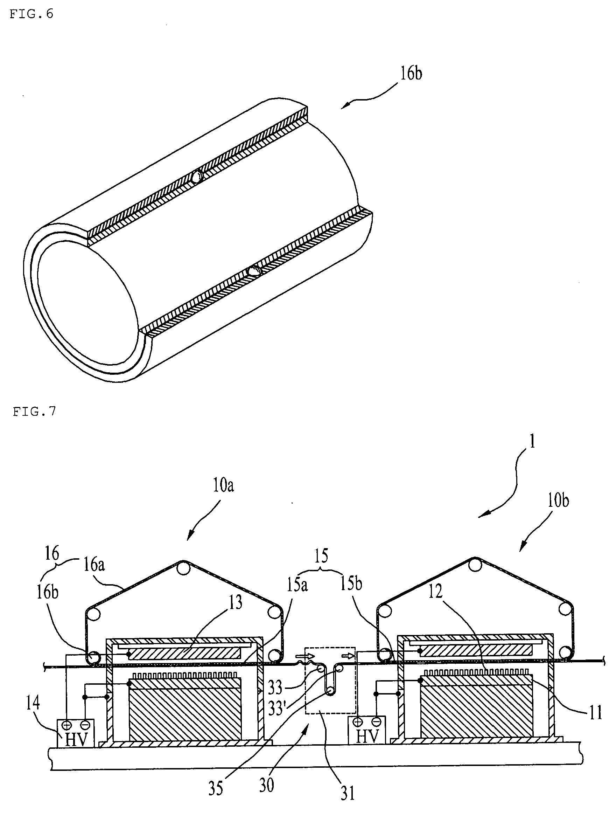

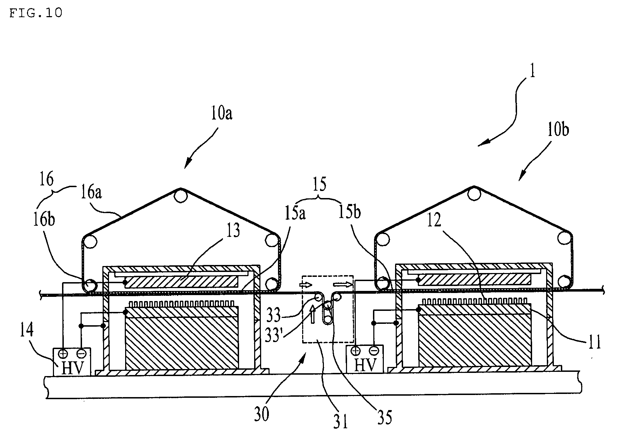

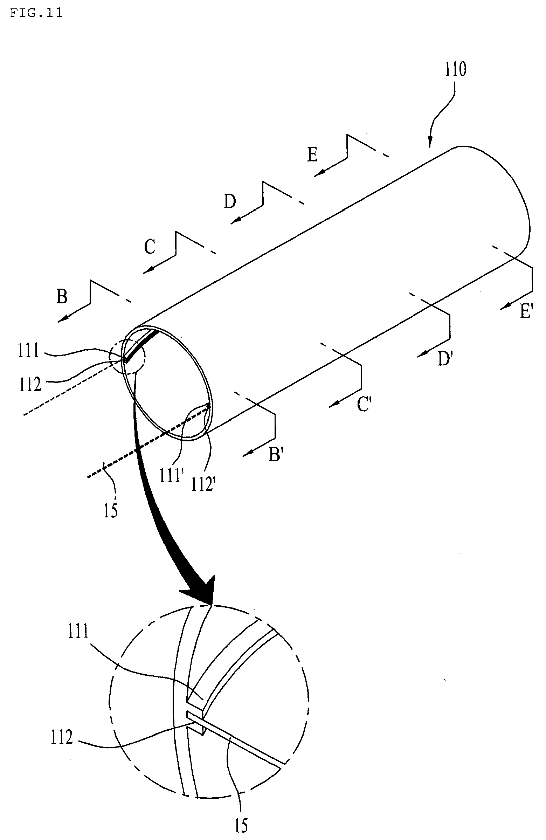

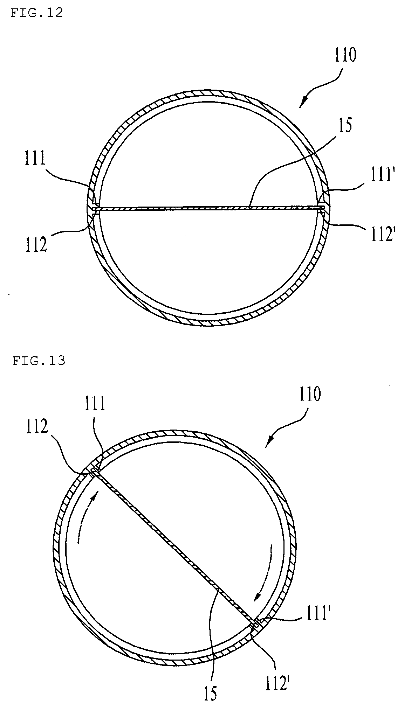

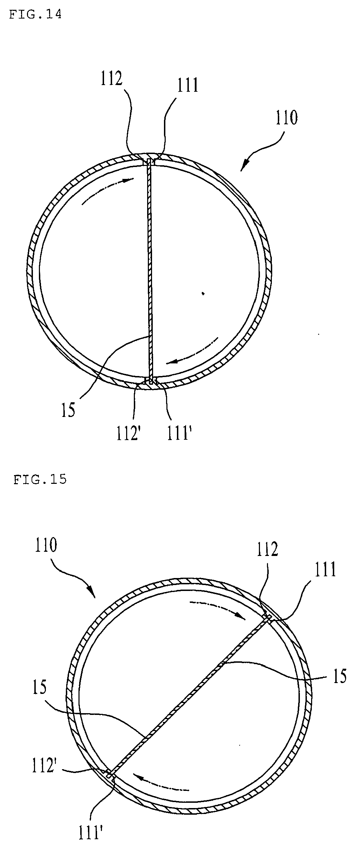

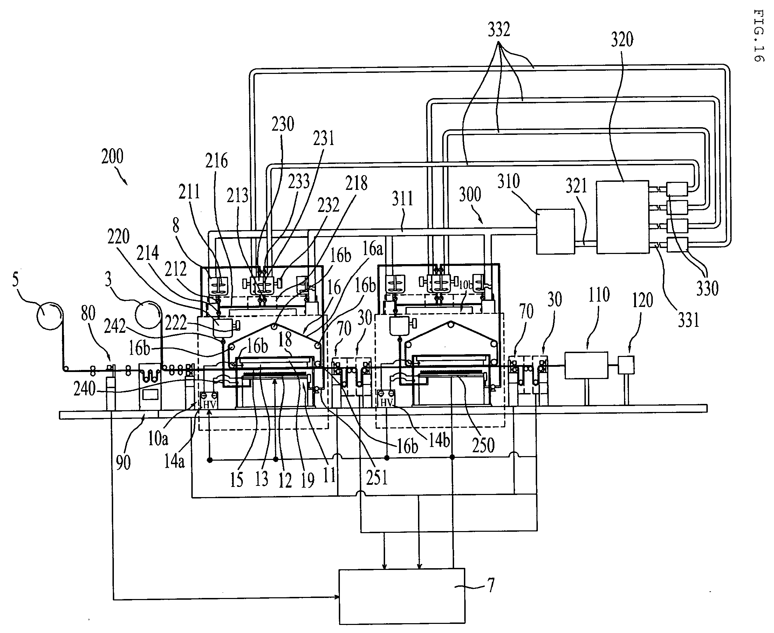

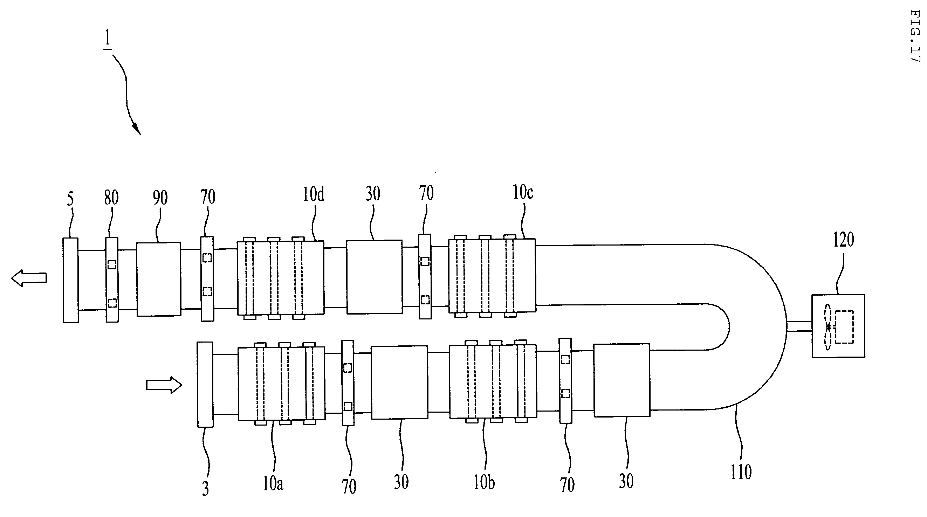

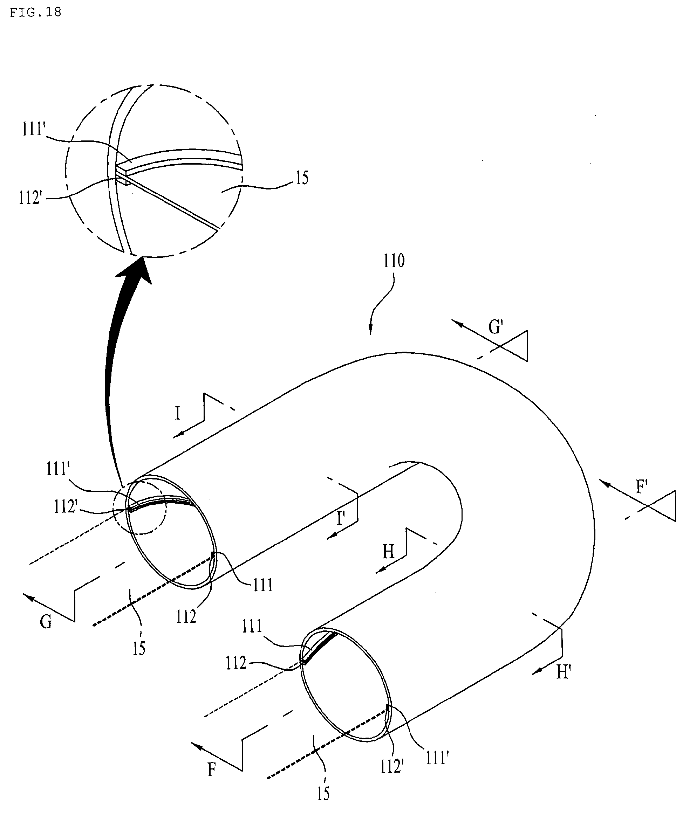

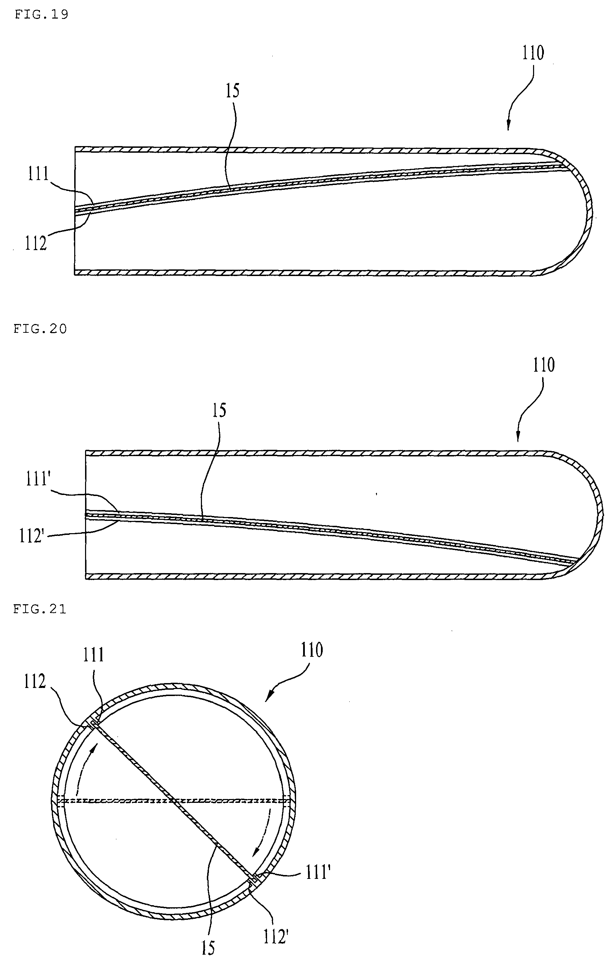

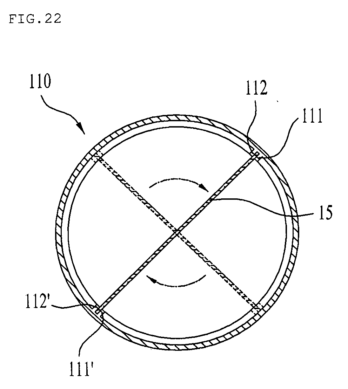

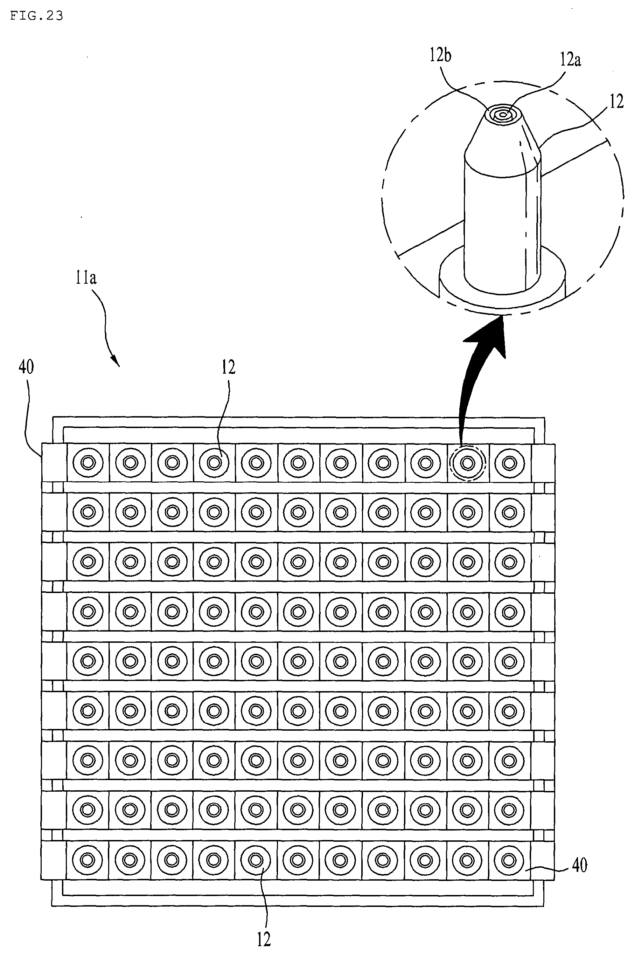

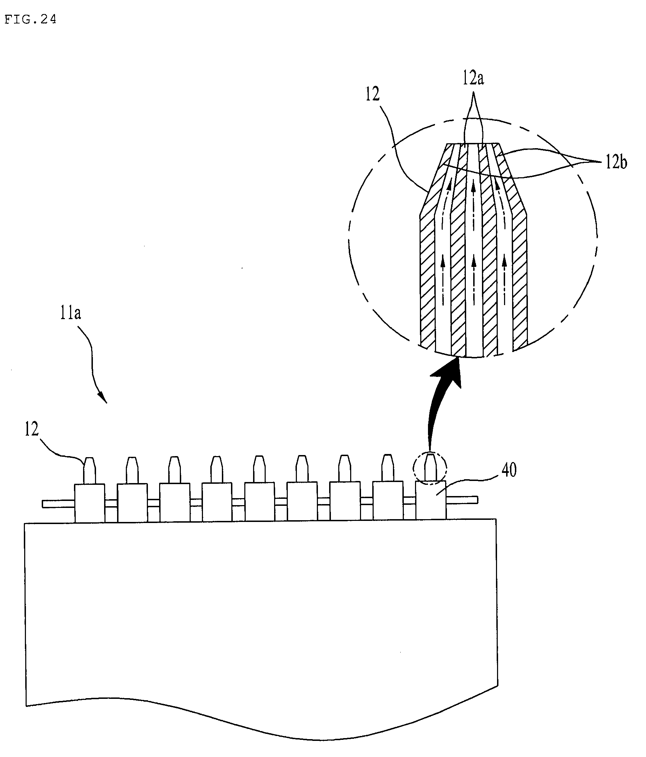

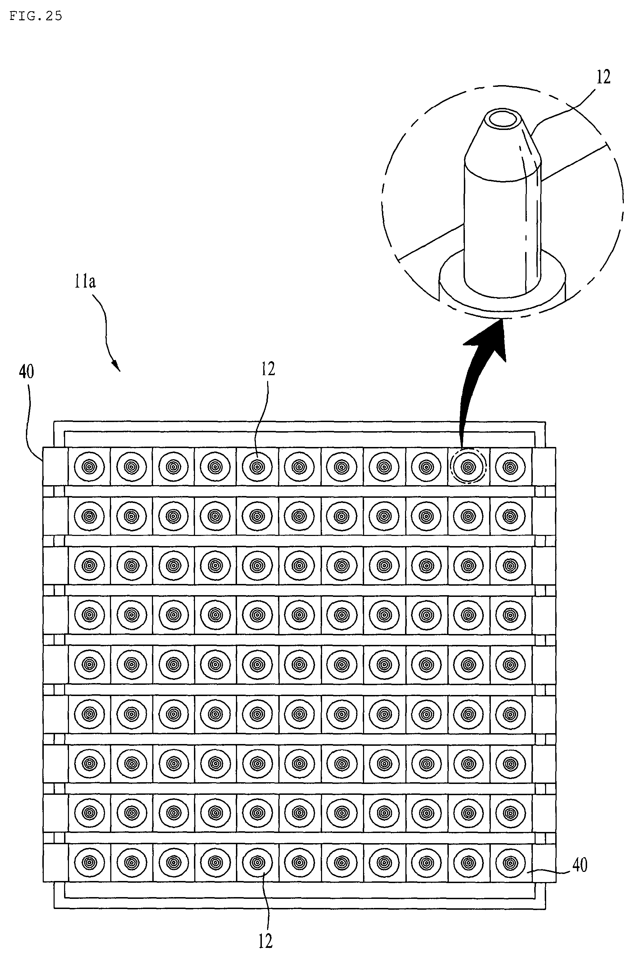

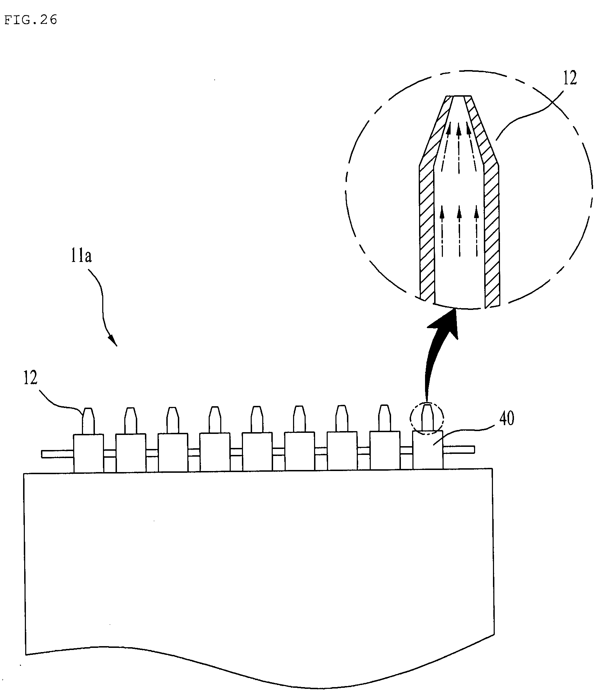

FIG. 1 schematically depicts a side view of an electrospinning apparatus according to an exemplary embodiment of the present invention, FIG. 2 schematically illustrates a top plan view of a nozzle block installed in each unit of the electrospinning apparatus according to an exemplary embodiment of the present invention, FIG. 3 schematically illustrates a front end view of a heat transfer device in a nozzle block installed in each unit of the electrospinning apparatus according to an exemplary embodiment of the present invention, FIG. 4 is a cross-sectional view of A-A' line according to an exemplary embodiment of the present invention, FIG. 5 schematically shows an auxiliary carry device of the electrospinning apparatus according to an exemplary embodiment of the present invention, FIG. 6 schematically shows an auxiliary belt roller of an auxiliary carry device of the electrospinning apparatus according to another exemplary embodiment of the present invention, FIG. 7 to FIG. 10 schematically illustrate a side view of operation process of a substrate feed speed adjusting device of the electrospinning apparatus according to an exemplary embodiment of the present invention, FIG. 11 schematically shows a perspective view of a flip device of the electrospinning apparatus according to an exemplary embodiment of the present invention, FIG. 12 is a cross-sectional view of B-B' line according to an exemplary embodiment of the present invention, FIG. 13 is a cross-sectional view of C-C'line according to an exemplary embodiment of the present invention, FIG. 14 is a cross-sectional view of D-D' line according to an exemplary embodiment of the present invention, FIG. 15 is a cross-sectional view of E-E'line according to an exemplary embodiment of the present invention, FIG. 16 schematically depicts a side view of an electrospinning apparatus according to an exemplary embodiment of the present invention, FIG. 17 schematically depicts a top plan view of an electrospinning apparatus according to an exemplary embodiment of the present invention, FIG. 18 schematically shows a flip device of the electrospinning apparatus according to an exemplary embodiment of the present invention, FIG. 19 is a cross-sectional view of F-F'line according to an exemplary embodiment of the present invention, FIG. 20 is a cross-sectional view of G-G'line according to an exemplary embodiment of the present invention, FIG. 21 is a cross-sectional view of H-H' line according to an exemplary embodiment of the present invention, FIG. 22 is a cross-sectional view of I-I' line according to an exemplary embodiment of the present invention, FIG. 23 schematically illustrates a top plan view of an electro-blown electrospinning apparatus installed in unit of the electrospinning apparatus according to an embodiment of the present invention, FIG. 24 schematically illustrates a side view of an electro-blown electrospinning apparatus installed in unit of the electrospinning apparatus according to an embodiment of the present invention, FIG. 25 schematically illustrates a top plan view of an electro-spinning electrospinning apparatus installed in unit of the electrospinning apparatus according to an embodiment of the present invention, and FIG. 26 schematically illustrates a top plan view of an electro-spinning electrospinning apparatus installed in unit of the electrospinning apparatus according to an embodiment of the present invention.

As illustrated in the drawings, the electrospinning apparatus(1) according to the present invention comprises a bottom-up electrpspinning apparatus(1), consecutively provided at least one or more units(10a, 10b, 10c, 10d) separated in predetermined space, each of the unit(10a, 10b, 10c, 10d) individually electrospinning the same matter of polymer spinning solution, or individually electrospinning polymer spinning solution with different material, and produces filter material such as nanofiber or nanofiber filter.

According to the present invention, the electrospinning apparatus(1) comprises a bottom-up electrospinning apparatus, and it can comprises a top-down electrospinning apparatus(not shown).

Moreover, according to the present invention, 4 units(10a, 10b, 10c, 10d) of the electrospinning apparatus (1) are provided, number of the units(10a, 10b, 10c, 10d) is preferably provided 2 or more, and it is not limited thereto. Here, in each unit(10a, 10b, 10c, 10d) of the electrospinning apparatus(1) comprises a spinning solution main tank(8) filling polymer spinning solution inside, a metering pump(not shown) for quantitatively providing polymer spinning solution filled in the spinning solution main tank(8), a nozzle block which arranged and installed a plurality of pipe(40) provided a plurality of nozzle(12) which comprising in pin form and jetting polymer spinning solution filled in the spinning solution main tank(8), a collector(13) separated in predetermined space form a nozzle(12) to collect polymer spinning solution sprayed from the nozzle(12), and a voltage generator (14a, 14b, 14c, 14d) generating voltage to the collector(13).

According to the structure as described above, the electrospinning apparatus(1) according to the present invention quantatively provides polymer spinning solution filled in a spinning solution main tank(8) to a plurality of nozzle(12) formed in a nozzle block(11) through a metering pump, and provided polymer spinning solution is jetted and line-focused on a collector flowing high voltage through a nozzle(12), a nanofiber web laminating formed on a substrate(15) moved from on a collector(13), and produces nanofiber or a nanofiber filter.

Here, among each units(10a, 10b, 10c, 10d) of the electrospinning apparatus(1), in front of the unit (10a) located in the front-end, by electrospinning of polymer spinning solution provided to the unit (10a), a supply roller(3) for providing a substrate(15) laminating formed a nanofiber web, among each unit(10a, 10b, 10c, 10d), in back of the unit (10d) located in the rear-end, a winding roller(5) for winding a substrate(15) laminating formed a nanofiber web.

In addition, in each unit(10a, 10b, 10c, 10d) of the electrospinning apparatus(1), further comprising an auxiliary carry device(16) for carrying a substrate(15) provided through the supply roller(3) to a winding roller(5) and simultaneously adjusting feed speed of a substrate(15).

Also, the electrospinning apparatus(1) comprises a main control device(7), and the main control device controls a nozzle block (11) installed in each unit(10a, 10b, 10c, 10d), an auxiliary carry device(16), and a voltage generator (14a, 14b, 14c, 14d), and simultaneously connected to a thickness measuring device(70), a substrate feed speed adjusting device(30), and a permeability measuring device, and controls them.

Meanwhile, through each unit(10a, 10b, 10c, 10d) of the electrospinning apparatus(1), a laminating device(90) for laminating a nanofiber web electrospun on a substrate(15) is provided in back of a unit (10d) located in the lowermost among each unit(10a, 10b, 10c, 10d), and by the laminating device(90), a nanofiber web electrospun through the electrospinning apparatus(1) performs post-processing.

As described above, going through each unit(10a, 10b, 10c, 10d) of the electrospinning apparatus(1), a substrate(15) which electrospun polymer spinning solution and laminating formed a nanofiber web is preferable comprising non-woven fabric or fabric, and it is not limited thereto.

In this case, material of polymer spinning solution spun through each unit(10a, 10b, 10c, 10d) of the electrospinning apparatus(1) is not limited, for example polypropylene(PP), polyethylene terephthalate(PET), polyvinylidene fluoride, nylon, polyvinyl acetate, polymethyl methacrylate, polyacrylonitrile(PAN), polyurethane(PUR), polybutylene terephthalate(PBT), polyvinyl butyral, polyvinyl chloride, polyethyleneimine, polyolefin, polylactic acid(PLA), polyvinyl acetate(PVAc), polyethylene naphthalate(PEN), polyamide(PA), polyvinyl alcohol(PVA), polyethylene imide(PEI), polylaprolactone(PCL), polyacticacidglycidyl(PLGA), silk, cellulose, and chitosan, among them, polypropylene(PP) material and heat-resistant polymer material, polyamide, polyimide, polyamideimide, poly(meta-phenylene isophthalamide), polysulfone, polyether ketone, polyether imide, polyethylene terephthalate, polytrimethylene terephthalate, polyethylene naphthalate, and polyphospazene group such as polytetrafluoroethylene, polydiphenoxyphosphazene, poly vis[2-(2-methoxyethoxy)phosphazene], polyurethane copolymer such as polyurethane and polyetherurethane, and cellulose acetate, cellulose acetate butyrate, and cellulose acetate propionate are preferably used in common.

In addition, in the units(10a, 10b, 10c, 10d), polymer spinning solution provided through a nozzle(12) is solution which dissolved polymer of synthetic resin material capable of electrospinning in appropriate solvent, it is not limited if type of solvent is also capable of dissolving polymer.

For example, phenol, formic acid, sulfuric acid, m-cresol, tfluorineacetatenhydride, dichloromethane, water, N-methylmorepholine, N-oxide, chloroform,tetrahydreofuran, and aliphatic kentone group such as methylisobutylketone and methylethylketone, and aliphatic hydrotyl group such as hexane, tetrachloretlylene, acetone, glycol group, propylene glycol, diethylene glycol, etlylene glycol, and halogen compound group such as tricrolethylene, dichloromethane, and aromatic compound group such as toluene, xylene, and alicyclic compound group such as cyclohexanone, cyclohexane, and ester group such as n-butyl acelate, ethyl acetate, and aliphatic ether group such as butyl cellosolve, acetic acid2-ethoxyethanol, 2-ethoxyethanol, amide dimethylformamide, and dimethyl acetamide, and a plurality of type of solvent can be mixed and used. For polymer spinning solution, additives such as conductive improver is preferably contained, and it does not limited thereto.

Here, the electrospinning apparatus(1) is provided an overflow device(200). In other words, in each units(10a, 10b, 10c, 10d) of the electrospinning apparatus(1) is each provided an overflow device(200) comprising a spinning solution main tank(8), a second feed pipe(216), a second feed control device(218), a middle tank(220), and a recycled tank(230). According to the present invention, in each unit (10a, 10b, 10c, 10d) of the electrospinning apparatus (1), and over flow device(200) is each provided, in a unit (10a) of the units(10a, 10b, 10c, 10d), an overflow device (200) is provided, and in the overflow device(200), other units(10b, 10c, 10d) are connected in series.

In addition, among each unit(10a, 10b, 10c, 10d), in any one unit(10a, 10b) located in the front-end, an overflow device(200) is provided, and in the overflow device(200), another unit(10b, 10a) is connected in series, and among units(10a, 10d) located in the rear-end, in any one unit (10c, 10d), an overflow device(200) is provided, and in the overflow device(200), another unit(10d, 10c) is connected in series. According to the structure as described above, the spinning solution main tank(8) stores polymer spinning solution which is raw material of nanofiber or a nanofiber filter. In the spinning solution main tank, an agitation device(211) for preventing separation and solidification of polymer spinning solution is provided.

Also, the second feed pipe(216) comprises a pipe(not-shown) line-focused to the spinning solution main tank(8) or a recycled tank(230), and valves(212, 213, 214), and carries polymer spinning solution from the spinning solution main tank(8) or the recycled tank(230) to a middle tank(220).

Meanwhile, the second control device(218) controls valves(212, 213, 214) of the second feed pipe(216) and controls carry operation of the second feed pipe(216).

Here, the valve(212) controls carrying of polymer spinning solution from a spinning solution main tank(8) to a middle tank (220), the valve(213) controls carrying of polymer spinning solution from a recycled tank(230) to a middle tank(220), and the valve(214) controls amount of polymer spinning solution from a spinning solution main tank(8) and a recycled tank(230) to a middle tank(220).

As described above, through a second sensor (222) provided in a middle tank(230) controlled by the valve(212, 213, 214), level of measured polymer spinning solution is controlled.

The middle tank(220) stores polymer spinning solution provided from a spinning solution main tank(8) or a recycled tank(230), the nozzle block (11) provides polymer spinning solution, and a second sensor (222) is provided for measuring level of provided polymer spinning solution.

Here, the second sensor (222) is preferably comprising a sensor capable of measuring level of polymer spinning solution such as light sensor or infrared light sensor, and it does not limited thereto.

Meanwhile, a supply pipe(24) for providing polymer spinning solution to bottom of the middle tank(220) through a nozzle block(11) and a supply control valve(242) are provided, and the supply control valve(242) controls supplying operation of polymer spinning solution through a supply pipe(240).

The recycled tank(230) stores retrieved polymer spinning solution by overflow, and provided an agitation device(231) for preventing separation and solidification of polymer spinning solution.

Here, the first sensor (232) is preferably comprising a sensor capable of measuring level of polymer spinning solution such as a light sensor or an infrared light sensor, and it does not limited thereto.

Meanwhile, in the nozzle block (11), overflowed polymer spinning solution is retrieved through a spinning solution recovery path(250) provided in bottom of a nozzle block(11), and the spinning solution recovery path(250) retrieves polymer spinning solution in a recycled tank(230) through a first feed pipe (251).

In addition, the first feed pipe(251) comprises a pipe(not shown) connected to the recycled tank(230) and a pump(not shown), and by power of the pump, polymer spinning solution is carried from spinning solution recovery path(250) to a recycled tank(230).

In this case, the recycled tank is preferably provided one or more, and in the case of two or more of the recycled tank(230) are provided, a plurality of first sensor (232) and valve(233) are preferably provided.

Here, in the case of the recycled tank (230) is provided two, valve(233) located in top of the recycled tank(230) is provided in corresponded number, and because of this, the first feed control device(not shown) controls 2 or more valve(233) located in top according to level of the first sensor (232) provided in a recycled tank(230), and controls whether to carry polymer spinning solution to a recycled tank(230) among a plurality of recycled tank(230).

Meanwhile, the electrospinning apparatus(1) is provided a VOC recycling device(300). In other words, in each unit(10a, 10b, 10c, 10d) of the electrospinning apparatus(1), VOC recycling device(300) is provided which comprises a condensation device(310) for condensing and liquefying VOC which is generated when spinning polymer spinning solution through a nozzle(12), a distillation device(320) for distilling and liquefying VOC condensed through the condensation device(310), and a solvent storage device(330) for storing solvent liquefied through the distillation device(320).

Here, the condensation device(310) is preferably comprising water cooling, evaporative, and air cooling condensation device, and it does not limited thereto.

Meanwhile, VOC in evaporation state which is generated from each of the unit(10a, 10b, 10c, 10d) is flowed in a condensation device(310), and pipes(311, 312) for storing VOC in liquefaction state generated from the condensation device(310) to a solvent storage device(330) are each connected and installed. In other words, pipes(311, 331) for mutually connecting each of the unit(10a, 10b, 10c, 10d) and the condensation device (310), and connecting the condensation device(310) and the solvent storage device(330) are each connected and installed.

In the present invention, it comprises structure of condensing VOC through the condensation device(310) and providing condensed VOC in liquefaction state to a solvent storage device(330), and in the case of a distillation device(320) is provided between the condensation device(310) and the solvent storage device(330) and applied to one or more solvent, it is possible to comprise each solvent to be separated and classified.

Here, the distillation device(320) is connected to the condensation device(310) and heats in high temperature of VOC in liquefaction state and evaporates, and again cools it, and liquefied VOC is provided to the solvent storage device(330).

In this case, the VOC recycling device(300) comprises a condensation device(310) which provides air and cooling water to vaporized VOC discharged through each unit(10a, 10b, 10c, 10d) and condenses and liquefies, a distillation device(320) which heats condensed VOC through the condensation device(310), makes it in evaporation state and again cools and makes it in liquefaction state, and a solvent storage device(320) which stores VOC liquefied through the distillation device(320). Here, the distillation device(320) preferably comprises a fractional distillation, and it does not limited thereto.

Also, pipes (311, 321, 331) are each connected and installed for mutually connecting each of the unit(10a, 10b, 10c, 10d) and a condensation device(310), the condensation device(310) and a distillation device(320), and the distillation device(320) and a solvent storage device(330).

Meanwhile, solvent content of polymer spinning solution which is overflowed and retrieved to a recycled tank(230), and in this case, the content measuring extracts sample from part of polymer spinning solution in recycled tank(230) and measures the sample, and such polymer spinning solution analysis and measurement are performed through conventional method.

As described above, in the case of solvent is required according to the measuring result, provided to the solvent storage device(330), and VOC in liquefaction state occurred when electrospinning polymer spinning solution is provided to the recycled tank(230). In other words, according to measuring result of liquefied VOC, the required amount is provided to the recycled tank and reused and recycled as solvent.

Here, a case(18) comprising each unit(10a, 10b, 10c, 10d) of the electrospinning apparatus(1) preferably comprises an electric conductor, the case(18) comprises an electric insulator, or the case(18) can be mixed and applied an electric conductor and an electric insulator, and the case can comprise in various materials.

In addition, in the case of top of the case (18) comprises an electric insulator and the bottom is mixed and applied an electric conductor, an insulation member(19) can be deleted. For this, the case is formed in one case mutually combining top forming an electric conductor and bottom forming an electric insulator, and it does not limited thereto.

As described above, the case(18) comprises an electric insulator and an electric conductor, and by top of the case(18) comprises an electric insulator, in order to attach a collector (13) to top and inner side of the case(18), separately provided insulation member(19) can be deleted, and because of this, composition of device can be simplified. Moreover, in the case of insulation between the collector(13) and the case(18) can be optimized and performing electrospinning by applying 35kV between a nozzle block (11) and a collector(13), insulation breakdown between the collector(13) and the case(18) and other members can be prevented.

In addition, leak current can be stopped in a desired realm, and observation of current provided from voltage generators (14a, 14b, 14c, 14d) is possible, and errors of the electrospinning apparatus(1) can be early detected, and because of this, the electrospinning apparatus(1) can be operated consecutively in long time, and production of nanofiber in required performance is stable, and mass-producing of nanofibers is possible.

Here, thickness of the case(18) forming an electric insulator satisfies "a=8mm".

Because of this, in the case of applying 40kV between the nozzle block(11) and the collector(13) and performing electrospinning, insulation breakdown occurring between a collector(13) and a case(18) and other members can be prevented, and leak current can be limited in desired realm. Also, the distance between the case(18) forming an electric insulator material inner side and the collector(13) outer side comprises satisfying "a+b=80mm".

Because of this, in the case of operating an electrospinning apparatus applying 40Kv between the nozzle block (11) and the collector(13), it can prevent insulation breakdown occurring between the collector(13) and the case(18) and other members, and limit leak current in prescribed realm.

Meanwhile, the electrospinning apparatus(1) is provided a thickness measuring device(70). In other words, between each unit(10a, 10b, 10c, 10d) of the electrospinning apparatus(1) is provided a thickness measuring device(70) for controlling of a substrate(15) feed speed and a nozzle block(11), and according to thickness of measured nanofiber web, a substrate(15) feed speed and a nozzle block(11) are controlled. According to the structure as described above, in the case of thickness of nanofiber web which after electrospinning in each unit(10a, 10b, 10c, 10d) of the electrospinning apparatus(1) and laminating formed on a substrate(15) is thinner than reference value, feed speed of the next unit(10b, 10c, 10d) is decreased, discharging amount of polymer spinning solution spun from a nozzle block(11) is increased, and by adjusting voltage intensity of voltage generators (14a, 14b, 14c, 14d), increasing discharging amount of polymer spinning solution per unit, and thickens a nanofiber web laminating formed on a substrate(15).

Meanwhile, in the case of thickness of nanofiber web which after electrospinning in each unit(10a, 10b, 10c) of the electrospinning apparatus(1) and laminating formed on a substrate(15) is measured thicker than reference value, feed speed of the next unit (10b, 10c, 10d) is increased, discharging amount of polymer spinning solution spun from a nozzle block (11) is decreased, and by adjusting voltage intensity of voltage generators (14a, 14b, 14c, 14d), decreasing discharging amount of polymer spinning solution per unit, and thins a nanofiber web laminating formed on a substrate(15).

Here, the thickness measuring device(70) puts between a substrate(15) income and provided, the top and bottom side are arranged in opposite sides, a thickness measuring portion(not shown) which measures distance to top or bottom of the substrate(15) by ultrasonic wave measuring method, and comprising a pair of ultrasonic wave, longitudinal wave, and transverse wave measuring method.

According to the thickness measuring device(70) comprising ultrasonic wave measuring method, through the measured distance, thickness of nanofiber web laminating formed on the substrate(15) is calculated.

In other words, the thickness measuring device(70) projects ultrasonic wave, longitudinal wave, transverse wave to the substrate(15) laminating formed nanofiber web, longitudinal wave and transverse wave each ultrasonic signal measures reciprocating motion time on the substrate(15), in other words, measures each propagation time of longitudinal wave and transverse wave, and through propagation time of measured longitudinal wave and transverse wave, propagation velocity of longitudinal wave and transverse wave from reference temperature of the substrate(15) laminating formed nanofiber web, and a desired formula using constant temperature of propagation velocity of longitudinal wave and transverse wave, thickness of nanofibers can be calculated.

By calculating thickness of a substrate(15) laminated a nanofiber web, in state of uneven inner temperature, by compensating error according to change is propagation velocity according to temperature change, thickness can be precisely measured, and even though there are some form of temperature distribution in a nanofiber web, thickness can be precisely measured.

Meanwhile, the electrospinning apparatus(1) is provided a permeability measuring device(80). In other words, among each unit(10a, 10b, 10c, 10d) of the electrospinning apparatus(1), in the rear of the unit (10d) located in the rear-end, a permeability measuring device(80) for measuring permeability of a nanofiber web laminating formed on a substrate (15) through each unit(10a, 10b, 10c, 10d) is provided, and the permeability measuring device(80) measure permeability of a nanofiber web by ultrasonic wave.

As described above, polymer spinning solution is electrospun through each unit(10a, 10b, 10c, 10d) of the electrospinning apparatus(1), after laminating forming a nanofiber web, and a substrate provided to a permeability measuring device(80) measures measuring value according to ultrasonic signal projected from the permeability measuring device(80), and in the case of permeability of measured nanofiber web is measured large, feed speed of each unit (10b, 10c, 10d) is decreased, discharging amount of a nozzle block(11) is increased, and by adjusting voltage intensity of voltage generators (14a, 14b, 14c, 14d), discharging amount of polymer spinning solution per unit is increased, laminating amount of polymer spinning solution on a substrate(15) is increased, and permeability is formed small.

In addition, through each unit (10a, 10b, 10c, 10d) of the electrospinning apparatus(1), polymer spinning solution is electrospun, after laminating forming a nanofiber web, a substrate(15) provided to a permeability measuring device(80) measures measuring value according to ultrasonic signal projected from the permeability measuring device(80), and in the case of permeability of measured nanofiber web is measured small, feed speed of each unit (10b, 10c, 10d) is increased, discharging amount of nozzle block(11) is decreased, by adjusting voltage intensity of voltage generators (14a, 14b, 14c, 14d), discharging amount of polymer spinning solution per unit is decreased, laminating amount of polymer spinning solution on a substrate(15) is decreased, and permeability is formed large.

As described above, after measuring permeability of the nanofiber web, by controlling feed speed of each unit(10a, 10b, 10c, 10d) and a nozzle block (11) according to permeability, a nanofiber web having even permeability can be produced.

Here, in the case of permeability deviation of the nanofiber web is less than a desired value, feed speed is not changed from the initial value, and in the case of the deviation is a desired value or more, feed speed can be changed from the initial value, and feed speed control can be simplified by a feed speed controlling device.

Moreover, except the feed speed control, discharging amount of a nozzle block(11) and voltage intensity can be adjusted, and in the case of permeability deviation is less than a desired value, discharging amount of a nozzle block(11) and voltage intensity are not changed from the initial value, and in the case of the deviation is a desired value or more, discharging amount of a nozzle block(11) and voltage intensity are changed from the initial value, and control of discharging amount of the nozzle block(11) and voltage intensity can be simplified.

Here, in rear-end of a thickness measuring device(70) of the electrospinning apparatus(1), a substrate feed speed adjusting device(30) for adjusting feed speed of a substrate(15) which electrospun polymer spinning solution, laminating formed a nanofiber web and carried is further provided.

For this, the substrate feed speed adjusting device(30) comprises a buffer section (31) formed between each unit(10a, 10b, 10c, 10d) of the electrospinning apparatus(1), a pair of support roller(33, 33') provided on the buffer section (31) and supporting a substrate(15), and an adjusting roller(35) provided between the pair of support roller(33, 33').

In this case, the support roller(33, 33') when carrying a substrate(15) laminating formed a nanofiber web by spinning solution spun by a nozzle(12) is for supporting carrying of the substrate(15), and a buffer section (31) formed between each of the unit(10a, 10b, 10c, 10d) is each provided in the front-end and the rear-end.

Also, the adjusting roller(35) is provided between the pair of support roller(33, 33'), the substrate(15) is wound, and by the adjusting roller(35) up and down movement, feed speed and motion time of substrates (15a, 15b) according to each of the unit(10a, 10b, 10c, 10d) are adjusted.

For this, a sensing sensor(not shown) for sensing feed speed of substrates (15a, 15b) in each of the unit(10a, 10b, 10c, 10d) is provided, and a main control device (7) is connected for controlling motion of an adjusting roller(35) according to feed speed of substrates(15a, 15b) in each unit(10a, 10b, 10c, 10d) measured by the sensing sensor.

According to the present invention, feed speed of substrates (15a, 15b) in each of the unit(10a, 10b, 10c, 10d) is sensed, composition comprises control portion controls adjusting roller(35) motion according to feed speed of sensed substrates(15a, 15b), provided outer side of a collector(13) to carry the substrate(15a, 15b), and an auxiliary belt(16a) or an auxiliary belt roller(16b) driving the auxiliary belt(16a), driving speed of a motor(not shown) is sensed, and according to this, composition comprising the control portion controls motion of an adjusting roller(35) is possible. Meanwhile, in middle of the electrospinning apparatus(1) is provided a flip device(110). In other words, as illustrated in FIG. 1 to FIG. 11, among each unit(10a, 10b, 10c, 10d) applied to the electrospinning apparatus(1), between the unit (10b) and the unit (10c) which are located in middle, a flip device(110) for rotating a substrate(15) is provided.

Here, inside of the flip device(110) is formed in cylindrical form having a hollow, and in the middle part, right and left side guide member(111, 111') having guide groove (112, 112') for inserting both ends of a substrate(15) on inner periphery in horizontal direction in both sides are each project inwardly formed, and the right and left side guide member(111, 111') s rotated in spiral form on inner periphery of a flip device(110) and project formed, and rotates a substrate(15) inserted in guide groove (112, 112').

In this case, among right and left guide member(111, 111') formed in inner periphery of the flip device(110) projected inwardly, the left side guide member(111) is extended and formed in upper direction according to inner periphery, again extended and formed in lower direction, located in the initial location and direction of the right side guide member(111'), and the right side guide member (111') extended and formed in lower direction following inner periphery, again extended and formed in upper direction, located in the initial location and direction of the left side guide member(111), a substrate(15) inserted in each guide groove (112, 112') of the right and left guide member (111, 111') is guided to the right and left side guide member (111, 111') and rotated in 180°.

Meanwhile, guide groove (112, 112') formed in the right and left side guide member (111, 111') are preferably formed in corresponds to width of a substrate(15) and a nanofiber web laminating formed on the substrate, and width of guide groove (112, 112') is preferably comprising changeable according to thickness of produced products.

According to the present invention, the flip device(110) is provided between the unit(10b) and the unit(10c) which are located in middle among each unit(10a, 10b, 10c, 10d), and comprises rotating a substrate(15), and the flip device(110) is each provided between all units(10a, 10b, 10c) and units (10b, 10c, 10d), repeatedly rotating a substrate(15), and electrospinning polymer spinning solution in both sides of a substrate(15) is possible.

Meanwhile, as illustrated in FIG. 16 to FIG. 22, a flip device(110) provided in the electrospinning apparatus(1) is formed approximately in "U" form for rotating a substrate(15) between the unit (10b) and the unit (10c) which are located in middle among each unit(10a, 10b, 10c, 10d), and the inside is formed in cylindrical form having a hollow, and right and left guide member(111, 111') having guide groove (112, 112') for inserting both sides of a substrate(15) in inner periphery in horizontal direction from the middle can be each formed projected inwardly.

In this case, among right and left guide member(111, 111') formed projected inwardly in inner periphery of the flip device(110), the left guide member(111) is extended and formed in upper direction following inner periphery, and rotated in spiral form to extend and form in lower direction, and the right side guide member (111') is located in the initial location and direction, and the right side guide member (111') is extended and formed in lower direction according to inner periphery, again extended and formed in upper direction, rotating in spiral form, and the left side guide member(111) is located in the initial location and direction.

According to the structure as described above, one side end and another side end of a substrate(15) inserted to each guide groove (112, 112') of right and left side guide member(111, 111') formed projected inwardly in inner periphery of the flip device(110) is guided right and left side guide member(111, 111'), inner periphery of a flip device(110) is rotated 180° mutually in opposite sides in spiral form, and top and bottom of a substrate(15) is reversed.

As described above, the flip device(110) is formed in "U" form, overlapped and located in criteria of side of units(10a, 10b) located in the front-end and units (10c, 10d) located in the rear-end among each of the unit(10a, 10b, 10c, 10d), because of this, when installing the electrospinnig apparatus(1) according to the present invention, not only installation space is large but also space use is easy, and because of this, installation and operation in narrow space is possible.

Moreover, a substrate(15) electrospun polymer spinning solution on the bottom through units(10a, 10b) located in the front-end among each unit(10a, 10b, 10c, 10d) and laminating formed a nanofiber web is guided to right and left side guide member(111, 111') having guide groove (112, 112') formed in spiral form in inner periphery of a flip device(110) formed in "U" form, rotating in 180 °, electrospinning polymer spinning solution on upper side of a substrate(15) located in bottom by rotation through units (10c, 10d) located in the rear-end, laminating forming a nanofiber web, and through a manufacturing process, both sides of a substrate(15) can laminating form a nanofiber web.

Here, guide groove (112, 112') formed in the right and left side guide member(111, 111') is preferably formed in corresponds to width of a substrate(15) and a nanofiber web laminating formed on the substrate(15), and according to thickness of produced products, width of guide groove (112, 112') preferably comprises changeable.

In an embodiment of the present invention, the flip device (110) is provided in "U" form between the unit (10b) and the unit(10c) which are between the unit (10b) and the unit (10c) located in middle among each unit(10a, 10b, 10c, 10d) of the electrospinning apparatus(1) and rotates a substrate(15), the flip device(110) is each provided between all units(10a, 10b, 10c) and unit (10b, 10c, 10d) and repeatedly rotating, and it can comprise electrospinning the same or different kind of polymer spinning solution on both sides of a substrate(15). Here, the flip device (110) is connected to a drying device(120). In other words, incoming to entrance of the flip device(110) and provided and discharging to outlet, a drying device(120) which rotates 180° following guide member of the flip device(110) inner periphery and for drying a substrate(15) which the bottom side meets the top.

As described above, by a drying device(120) connected to the flip device (110), in the flip device(110) is provided hot air or steam, polymer spinning solution comprising solvent and solute is electrospun, evaporating solvent remained in a nanofiber web laminating formed on a substrate(15), and removes remained solvent in a nanofiber web of a substrate(15). In an embodiment of the present invention, the drying device(120) is connected to a flip device(110), through the flip device(110), hot air or steam is provided to rotated substrate(15), and evaporates remained solvent in a nanofiber web, and the drying device(120) is separately provided to front-end or rear-end of the flip device(110), after discharging a substrate(15) electrospun polymer spinning solution and laminating formed a nanofiber web, providing hot air or steam, and through a flip device(110), polymer spinning solution is electrospun, after rotating a substrate(15) laminating formed a nanofiber web, hot air or steam is provided.

According to the structure as described above, going through units(10a, 10b) located in the front-end among each of the unit(10a, 10b, 10c, 10d), polymer spinning solution is electrospun on bottom side, a substrate(15) laminating formed a nanofiber web is provided to a flip device(110), bottom side laminating formed a nanofiber web is rotated to locate in top, and simultaneously by hot air or steam provided from the drying device(120), remained solvent in a nanofiber web laminating formed in bottom of a substrate(15) is evaporated and removed.

Meanwhile, as illustrated in FIG. 2, in each pipe (40) of a nozzle block (11) installed in each unit(10a, 10b, 10c, 10d) of the electrospinning apparatus(1), a temperature adjusting control device(60) is provided.

In other words, installed in each of the unit(10a, 10b, 10c, 10d), a temperature adjusting control device(60) for adjusting temperature of polymer spinning solution to a pipe(40) of a nozzle block (11) provided polymer spinning solution to a plurality of nozzle(12) provided in the top.

Here, flow of polymer spinning solution in the nozzle block(11) is provided from a spinning solution main tank(8) stored polymer spinning solution through a spinning solution flowing pipe(not shown) to each pipe(40).

Also, polymer spinning solution provided to each of the pipe(40) is electrospun and discharged through a plurality of nozzle(12) and collected to a substrate(15) in nanofiber web form. In this case, a nozzle(12) equipped in several number which is separated in predetermined space in length direction of each pipe (40) and top of each of the pipe (40) comprises conductive member and in state of electrically connected, equipped to a pipe(40).

Here, the temperature adjusting control device(60) is provided in heat line(42) form in inner periphery of the pipe(40) which is for controlling temperature adjustment of polymer spinning solution provided and inflow to each pipe(40). In other words, as illustrated in FIG. 3 to FIG. 4, the temperature adjusting control device(60) of heat line(41) form in inner periphery of pipe(40) of the nozzle block(11) is formed in spiral form in inner periphery of a pipe (40) of a nozzle block(11), and adjusts polymer spinning solution provided and inflow to a pipe(40).

In an embodiment of the present invention, in inner periphery of pipe(40) of the nozzle block(11), a temperature adjusting control device(60) of heat line(41) form is provided in spiral form, and the temperature adjusting control device(60) is formed in heat line(41) form, provided several number in length direction in inner periphery of the pipe(40), and it can comprise adjusting temperature of polymer spinning solution, the temperature adjusting control device(60) is formed in approximately "C" form, provided in inner periphery of the pipe, and it can comprise to adjust temperature of polymer spinning solution.

Here, in order to adjust temperature of the plurality of pipe(40), each pipe(40) and a temperature adjusting control device(60) is connected to a main control device(7), and according to the main control device(7), temperature of polymer spinning solution is adjusted and controlled. Meanwhile, as illustrated in FIG. 5, an auxiliary carry device(16) for adjusting feed speed of a substrate(15) or carrying a substrate(15) income and provided to each unit(10a, 10b, 10c, 10d) comprises an auxiliary belt(16a) which facilitates desorption and carrying of a substrate(15) attached to a collector(13) in electrostatic gravitation installed in each unit(10a, 10b, 10c, 10d) and synchronizes and rotates to feed speed of a substrate(15), and an auxiliary belt roller(16b) which supports and rotates the auxiliary belt(16a).

According to the structure as mentioned above, an auxiliary belt(16a) rotates by rotation of the auxiliary belt roller(16b), a substrate(15) incomes and supplies to units(10a, 10b) by rotation of the auxiliary belt(16a), for this, any one auxiliary belt roller(16b) among the auxiliary belt roller(16b) is connected to a motor capable of rotation.

According to an embodiment of the present invention, the auxiliary belt(16a) is provided 5 auxiliary belt rollers(16b), comprising by a motor motion, any one auxiliary belt roller(16b) rotates, as auxiliary belt(16a) rotates simultaneously the other auxiliary belt roller(16b) rotates, or the auxiliary belt(16a) is provided 2 or more auxiliary belt rollers(16b), comprising by a motor motion, any one auxiliary belt roller(16b) rotates, according to this, auxiliary belt(16a) and the other auxiliary belt roller(16b) rotate.

Meanwhile, in an embodiment of the present invention, the auxiliary carry device(16) comprises an auxiliary belt roller(16b) which is capable of driving by a motor and an auxiliary belt(16a), and as illustrated in FIG. 6, the auxiliary belt roller(16b) can comprise a roller with low coefficient of friction, and a roller rotates by less power income and provided by a substrate(15).

In this case, the auxiliary belt roller(16b) is preferably comprising a roller including bearing with low coefficient of friction, and because of this, a motor can be deleted.

In an embodiment of the present invention, the auxiliary carry device(16) comprises an auxiliary belt(16a) and an auxiliary belt roller(16b) with low coefficient of friction, and the auxiliary belt(16a) can comprise providing a roller with low coefficient of friction and carrying a substrate(15). Also, in an embodiment of the present invention, for the auxiliary belt roller(16b), a roller with low coefficient of friction is applied, and if a roller has low coefficient of friction, the form and composition are not limited, and it is applied to a roller comprising bearings such as rolling bearing, oil bearing, ball bearing, roller bearing, sliding bearing, sleev bearing, hydrodynamic journal bearing, hydrostatic bearing, pneumatic bearing, air dynamic bearing, air static bearing, and air bearing, and applied to a roller decreasing coefficient of friction by including materials such as plastic and emulsifier, and additives.

Meanwhile, as illustrated in FIG. 23 to FIG. 26, each unit(10a, 10b, 10c, 10d) of the electrospinning apparatus(1) comprises units(10a, 10c) provided an electro-blown electrospinning apparatus(not shown) and units (10b, 10d) provided an electro-spinning electrospinning apparatus(not shown), and the electro-blown electrospinning apparatus and the electro-spinning electrospinning apparatus can be alternately performed.

In this case, each nozzle(12) arranged and installed a plurality of nozzle block (11a) in units(10a, 10c) comprising the electro-blown electrospinning apparatus comprises structure of polymer spinning solution and compressed air simultaneously sprayed, and located in the rear-end, each nozzle(12) of a pipe(40) arranged and installed a plurality of nozzle block (11b) in units(10b, 10d) comprising an electro-spinning electrospinning apparatus comprises structure of polymer spinning solution sprayed.

For this, a nozzle(12) provided in a pipe(40) of units(10a, 10c) comprising the electro-blown electrospinning apparatus comprises nozzle of double pipe form, and a nozzle(12) provided in a pipe(40) of units (10b, 10d) comprising the electro-spinning electrospinning apparatus comprises nozzle of single pipe.

According to the structure as described above, located in front-end among each unit(10a, 10b, 10c, 10d) of the electrospinning apparatus, in a nozzle(12) in units(10a, 10c) comprising an electro-blown electrospinning apparatus, polymer spinning solution and compressed air are simultaneously sprayed, and located in the rear-end, in a nozzle(12) of units(10b, 10d) comprising an electro-spinning electrospinning apparatus, polymer spinning solution is electrospun.

In other words, located in front-end among each unit(10a, 10b, 10c, 10d) of the electrospinning apparatus, in units(10a, 10c) comprising an electro-blown electrospinning apparatus, in inner pipe(12a) of a nozzle (12) provided in double pipe form, polymer spinning solution is electrospun, and in outer pipe(12b), polymer and compressed air are simultaneously sprayed such as compressed air is jetted to lower side of the inner pipe(12a), and located in the rear-end, in units (10b, 10d) comprising an electro-spinning electrospinning apparatus, in nozzle provided in single pipe form, only polymer spinning solution is electrospun.

According to the structure as described above, after laminating forming a nanofiber web of thick diameter on a substrate carried through the electrospinning apparatus(1), laminating forming a nanofiber web of thin diameter, as stated above, nanofiber web of different diameter can be repeatedly laminating formed.

In other words, with a nozzle(12) of a unit (10a) comprising the electro-blown electrospinning apparatus, jetting polymer spinning solution and compressed air, laminating forming a nanofiber web of thick diameter on a substrate(15), through a unit (10a) comprising the electro-blown electrospinning apparatus, on a substrate(15) laminating formed a nanofiber web of thick diameter, with a nozzle(12) of a unit (10b) comprising an electro-spinning electrospinning apparatus, electrospinning polymer spinning solution, laminating forming a nanofiber web having thin diameter on a nanofiber web having thick diameter laminated on a substrate(15), through units(10a, 10c) comprising an electro-blown electrospinning apparatus and units (10b, 10d) comprising an electro-spinning electrospinning apparatus are alternately provided, a nanofiber web of thick diameter and a nanofiber web of thin diameter are repeatedly laminating formed, and produces nanofiber or nanofiber filter. In this case, in order to adjust diameter of a nanofiber web, without separately adjusting voltage intensity of each voltage generator (14a, 14b, 14c, 14d) provided in units(10a, 10c) comprising the elctro-blown electrospinning apparatus and units (10b, 10d) comprising an electro-spinning electrospinning apparatus, through each device, a nanofiber web of thick diameter and a nanofiber web of thin diameter are jetted. According to the present invention, in order to after laminating a nanofiber web of thick diameter on a substrate(15) and again laminating a nanofiber web of thin diameter, the electrospinning apparatus(1) is alternately provided in order of a unit(10a) comprising an electro-blown electrospinning apparatus and a unit (10b) comprising an electro-spinning electrospinning apparatus, in order to after laminating a nanofiber web of thin diameter on a substrate (15) and laminating a nanofiber web of thick diameter, the electrospinning apparatus(1) can be alternately provided and installed in order of a unit (10b) comprising an electro-spinning electrospinning apparatus and a unit(10a) comprising an electro-blown electrospinning apparatus.

Moreover, according to the present invention, units(10a, 10c) comprising an electro-blown electrospinning apparatus and units (10b, 10d) comprising an electro-spinning electrospinning apparatus are alternately and repeatedly provided, after laminating a nanofiber web of thick diameter, a nanofiber web of thin diameter is laminated, and comprises structure of a nanofiber web of thick diameter and a nanofiber web of thin diameter are consecutively laminated on a nanofiber web of thin diameter, the electrospinning apparatus(1) is provided units(10a, 10c) comprising an electro-blown electrospinning apparatus in the front-end, and consecutively provided units(10b, 10d) comprising an electro-spinning electrospinning apparatus in the rear-end, it can comprise structure of after laminating a nanofiber web of thick diameter consecutively on a substrate(15), and consecutively laminating a nanofiber web of thin diameter on a nanofiber web of thick diameter.

According to the structure as described above, in units(10a, 10c) provided the electro-blown electrospinning apparatus, an overflow device(200) is provided, in units (10b, 10d) provided an electro-spinning electrospinning apparatus, an overflow device(200) can be provided, in a unit(10a) provided the electro-blown electrospinning apparatus is provided an overflow device(200), in the overflow device(200), an electro-blown electrospinning apparatus of the other unit (10c) comprises structure connected in series, in a unit(10a) provided the electro-spinning electrospinning apparatus, an overflow device(200) is provided, and in the overflow device(200), an electro-spinning electrospinning apparatus of the other unit(10d) preferably comprises structure of connected in series, and in a unit (10b) provided the electro-spinning electrospinning apparatus is provided an overflow device(200), in the overflow device(200), an electro-spinning electrospinning apparatus of the other unit (10d) preferably comprise structure connected in series, and in a spinning solution main tank(9) each provided in units(10a, 10c) provided the electro-blown electrospinning apparatus and in units (10b, 10d) provided the electro-spinning electrospinning apparatus, polymer spinning solution of material of nanofiber or nanofiber filter is stored, and in the spinning solution main tank(8), an agitation device(211) is preferably provided inside for separating polymer spinning solution and preventing coagulation.

Moreover, in the case of in the rear-end of each unit(10a, 10b, 10c, 10d) provided the electro-blown electrospinning apparatus and the electro-spinning electrospinning apparatus, a thickness measuring device(70)is provided, and it measures thickness of a nanofiber web laminating formed by polymer spinning solution electrospun from an electro-blown electrospinning apparatus and thickness of a nanofiber web laminating formed by polymer spinning solution electrospun from an electro-spinning electrospinning apparatus, and according to measured thickness, feed speed of a substrate(!5) and a nozzle block (11) are preferably controlled.

Also, in the case of in the electrospinning apparatus (1) comprising the electro-blown electrospinning apparatus and the electro-spinning electrospinning apparatus, a flip device(110) is provided, going through a unit (10a) installed the electro-blown electrospinning apparatus and a unit (10b) installed the electro-spinning electrospinning apparatus, rotating a substrate(15) laminating formed a nanofiber web of thick diameter on bottom side and a nanofiber web of relatively thin diameter in 2 layers, on top of a substrate(15) not laminated a nanofiber web, again going through a unit (10c) installed an electro-blown electrospinning apparatus and a unit(10d) installed an electro-spinning electrospinning apparatus, a nanofiber web of thick diameter and a nanofiber web of relatively thin diameter are laminating formed in 2 layers.

Below statement explains operation process of the electrospinning apparatus according to the present invention references to FIG. 1 to FIG. 26.

First, going through a supply roller(3) provided in front-end of the electrospinning apparatus(1) according to the present invention, a substrate(15) income and provided to a unit (10a) located in the uppermost end among each unit(10a, 10b, 10c, 10d) of the electrospinning apparatus(1).

As described above, through the supply roller(3), a substrate(15) income and provided to a unit (10a) of the electrospinning apparatus(1) is located on a collector(13), high voltage of voltage generators (14a, 14b, 14c, 14d) is generated through a nozzle(12) on a collector(13), and polymer spinning solution filled in a spinning solution main tank(8) in a substrate(15) on a collector(13) generating high voltage is electrospun through a nozzle(12) of a nozzle block (11). Here, polymer spinning solution filled in the spinning solution main tank(8) is consecutively and quantitatively provided to a plurality of nozzle(12) provided high voltage through a metering pump(not shown), and spinning solution provided to each of the nozzle(14) is spun and line-focused on a collector(13) flowing high voltage through a nozzle(14) and electrospun on a substrate(15), and a nanofiber web is produced.

As described above, a substrate(15) income and provided to a unit (10a) located in the front-end among each unit(10a, 10b, 10c, 10d) is carried to a unit (10b) located in the rear-end by an auxiliary belt roller(16b) of an auxiliary carry device(16) operated by driving of a motor(not shown) and an auxiliary belt(16a) driving by rotation of the auxiliary belt roller(16b), a substrate(15) is carried to each unit(10a, 10b, 10c, 10d) by operation of an auxiliary carry device(16) provided in each unit(10a, 10b, 10c, 10d), and the same kind of polymer spinning solution is each electrospun on a substrate(15) inflow and provided from each unit(10a, 10b, 10c, 10d), or different kind of polymer spinning solution is each electrospun, and the process described above is repeated, laminating formed a nanofiber web on a substrate(15), and produces nanofiber or nanofiber filter.

Here, by an overflow device(200) provided in the electrospinning apparatus(1), polymer spinning solution overflowed from a nozzle block(11) is retrieved through a spinning solution recovery path(250) provided in bottom of a nozzle block(11), and retrieved polymer spinning solution is again reused and recycled.

In addition, by a VOC recycling device(300) provided in the electrospinning apparatus(1), VOC occurred when spinning polymer spinning solution through a nozzle(12) in each unit(10a, 10b, 10c, 10d) is recycled and reused. In other words, VOC in evaporation state occurred when spinning polymer spinning solution on a substrate through a nozzle(12) in each of the unit(10a, 10b, 10c, 10d) is discharged to a condensation device(310) through pipes(311, 331), and VOC in evaporation state discharged to a condensation device(310) is condensed and changed in liquefaction state, stored to a solvent storage device(330), and VOC stored in the solvent storage device(330) is recycled and reused.

As described above, VOC in evaporation state which is generated in each unit(10a, 10b, 10c, 10d) of the electrospinning apparatus(1) is cooled and condensed in a condensation device(310) by cooling methods such as water cooling, air cooling, and evaporative method, and changed in liquefaction state, liquefies VOC in liquefaction state condensed through a condensation device(310), the VOC in liquefaction is carried to a distillation device(320) and is distilled, and VOC in liquefaction state is carried to the distillation device(320) and is evaporated in order according to difference in the boiling point by heat of high temperature, and evaporated VOC is separated and classified according to solvent type and it is liquefied and discharged.

In this case, VOC in liquefaction state distilled through the distillation device(320) evaporates in order from solvent of low boiling point to solvent of high boiling point. In other words, VOC in liquefaction state evaporates in order of lower boiling point, and evaporated and liquefied VOC is discharged from a pipe provided in upper direction of a distillation device(320) to pipes(311, 321, 331) provided in lower direction, and provided to each solvent storage device(330).

As described above, VOC comprising several types of mixed solvent is classified to each solvent type and discharged, and stored to each solvent storage device(330), and solvent stored in a solvent storage device(330) classified according to each of the solvent type is reused and recycled by adding solvent in spinning solution.

Also, a substrate(15) electrospun polymer spinning solution through each unit(10a, 10b, 10c, 10d) of the electrospinning apparatus(1) and laminating formed a nanofiber web goes through a thickness measuring device(70) located in the rear-end of each unit(10a, 10b, 10c, 10d), and when going through the thickness measuring device(70), projecting ultrasonic wave, longitudinal wave, and transverse wave from the thickness measuring device(70), each ultrasonic signal of longitudinal wave and transverse wave reciprocating motion time on a substrate(15), in other words, each propagation time of longitudinal wave and transverse wave is measured.

Moreover, from a desired formula propagation using time of measured longitudinal wave and transverse wave, propagation speed of longitudinal wave and transverse wave from reference temperature of a substrate(15) laminating formed a nanofiber web, and constant temperature of propagation speed of longitudinal wave and propagation speed, calculating thickness of a nanofiber web, and thickness of a nanofiber web laminating formed on a substrate(15) is measured.

Here, when measuring thickness of a nanofiber web laminating formed on a substrate(15) going thorough each unit(10a, 10b, 10c, 10d) through the thickness measuring device(70), in the case of thickness of the nanofiber web is thinner than reference value, feed speed of the other units (10b, 10c, 10d) is decreased, or by adjusting voltage intensity of voltage generators (14a, 14b, 14c, 14d), increasing discharging amount per unit of polymer spinning solution spun from a nozzle block (11), thickness of a nanofiber web is formed thick.

In addition, when measuring thickness of a nanofiber web laminating formed on a substrate(15) going through each unit(10a, 10b, 10c) through the thickness measuring device(70), in the case of thickness of the nanofiber web is measured thicker than reference value, feed speed of the other units(10b, 10c, 10d) is increased, by adjusting voltage intensity of voltage generators (14a, 14b, 14c, 14d), decreasing discharging amount per unit of polymer spinning solution spun from a nozzle block(11), and thickness of a nanofiber web is formed thin.

Here, in the case of feed speed of a substrate (15) going through the thickness measuring device(70) is fast or slow, the substrate feed speed adjusting device(30) adjusts speed of a substrate(15) carried through an auxiliary carry device(16).

In other words, in the case of a sensing sensor installed in the electrospinning apparatus(1) sensed feed speed of a substrate(15a) in units(10a, 10b, 10c) located in the front-end among each unit (10a, 10b, 10c, 10d) is faster than feed speed of a substrate (15b) in units(10b, 10c, 10d) located in the rear-end, as illustrated in FIG. 7 to FIG. 8, a substrate(15a) carried from units(10a, 10b, 10c) located in the front-end is provided between the pair of support roller(33, 33') for preventing sagging, an adjusting roller(35) winding a substrate(15) is moved to lower side, among substrate(15) carried from units(10a, 10b, 10c) located in the front-end to units(10b, 10c, 10d) located in the rear-end, pulling a substrate(15a) carried to outer side of units(10a, 10b, 10c) located in the front-end and excessively carried to a buffer section (31) located between each unit(10a, 10'), feed speed of a substrate (15a) in units(10a, 10b, 10c) located in the front-end and feed speed of a substrate(15b) in units(10b, 10c, 10d) located in the rear-end are corrected and controlled as the same, and preventing sagging and wrinkle of a substrate(15a).

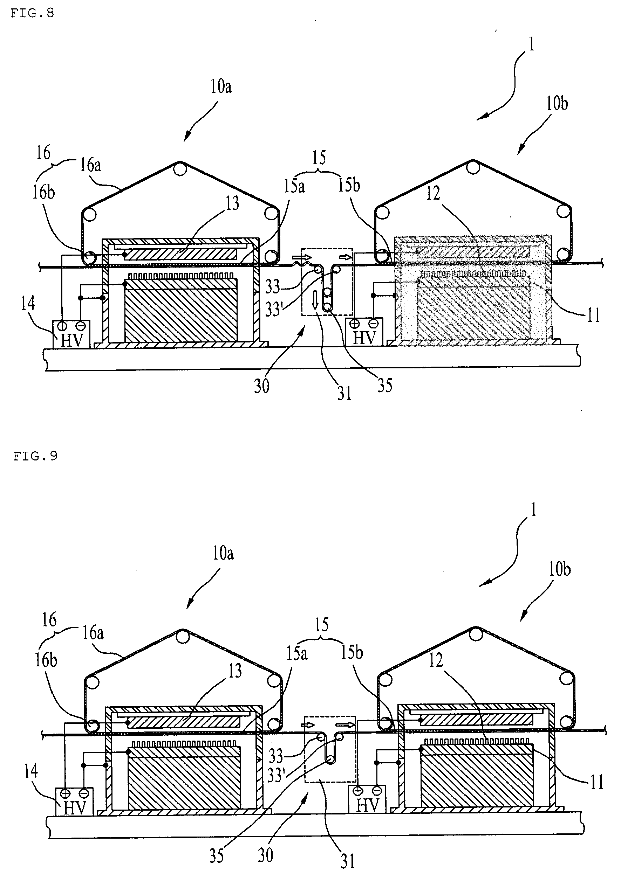

Meanwhile, in the case of the sensing sensor installed in the electrospinning apparatus(1) sensed feed speed of a substrate(15a) in units(10a, 10b, 10c) located in the front-end among each unit(10a, 10b, 10c, 10d) is slower than feed speed of a substrate (15b) in units(10b, 10c, 10d) located in the rear-end, as illustrated in FIG. 9 to FIG. 10, a substrate(15b) carried from units (10b, 10c, 10d) located in the front-end is provided between the pair of support roller(33, 33') for preventing sagging, an adjusting roller(35) winding a substrate(15) is moved to upper side, among substrate(15) carried from units (10b, 10c, 10d) located in the rear-end to units(10a, 10b, 10c) located in the front-end, quickly providing a substrate(15a) winding by an adjusting roller(35) in buffer section (31) located between each unit(10a, 10b, 10c, 10d) to units (10b, 10c, 10d) located in the rear-end, feed speed of a substrate(15a) in units(10a, 10b, 10c) located in the front-end and feed speed of a substrate(15b) in units (10b, 10c, 10d) located in the rear-end are corrected and controlled as the same, and preventing snapping of a substrate(15a).

According to the structure as described above, by adjusting feed speed of a substrate(15b) carried to units (10b, 10c, 10d) located in the rear-end among each of the unit (10a, 10b, 10c, 10d), feed speed of a substrate (15b) in units(10b, 10c, 10d) located in the rear-end among each of the unit(10a, 10b, 10c, 10d) and feed speed of a substrate(15a) in units(10a, 10b, 10c) located in the front-end are the same.

Meanwhile, by a flip device(110) provided between units(10b, 10c) in middle of the electrospinning apparatus(1) among each unit(10a, 10b, 10c, 10d) of the electrospinning apparatus(1), rotating a substrate(15) income and provided through a supply roller(3) and went through units(10a, 10b), and a substrate is rotated in 180° and the upper side and the lower side is reversed such as the upper side is rotated and located to the lower side and the lower side is rotated and located to the upper side.

In other words, as illustrated in FIG. 11 to FIG. 15, a substrate, which goes through each unit(10a, 10b) of the electrospinning apparatus(1) and polymer spinning solution is electrospun in the lower side and laminating forms a nanofiber web, is each formed projected inwardly in peripheral edge of both sides in horizontal direction of a flip device(110), and both sides of the substrate is inserted and carried following right and left side guide member(111, 111') having guide groove (112, 112'), and the upper side and the lower side are reversed in location of bottom and top.

In this case, any one end among both ends of the substrate(15) is carried in upper direction following left side guide member(111) among guide groove (111, 111') projected inwardly in peripheral edge of a flip device(110), again carried to lower direction, located in opposite direction and position to the initial position, another end of the substrate(15) is carried in lower direction following right side guide member(111'), again carried to upper direction, located in opposite direction and position to the initial position, and a substrate(15) inserted to each guide groove (112, 112') of right and left side guide member(111, 111') is guided to right and left side guide member(111, 111') and rotated in 180°.

According to the structure as described above, a substrate(15), which goes through each unit(10a, 10b) located in the front-end among each unit(10a, 10b, 10c, 10d) of the electrospinning apparatus(1) and the lower side is electrospun polymer spinning solution and laminating formed a nanofiber web, is rotated in 180°, and when going through each unit (10c, 10d) located in the rear-end, on the upper side of a substrate(15), electrospinning polymer spinning solution, and a nanofiber web can be laminating formed.

In other words, by the flip device(110), a substrate(15) is rotated in 180°, through units(10a, 10b) located in the front-end among each unit(10a, 10b, 10c, 10d) of the electrospinning apparatus(1), electrospinning polymer spinning solution on one side of a substrate(15), laminating formed a nanofiber web, and through units (10c, 10d) located in the rear-end among each unit(10a, 10b, 10c, 10d), on another side of a substrate(15), electrospinning polymer spinning solution and laminating formed a nanofiber web, and on both sides of a substrate(15), laminating formed a nanofiber web.

In the present invention, the flip device(110) is provided between the unit(10b) and the unit (10c) located in middle among each unit(10a, 10b, 10c, 10d) of the electrospinning apparatus(1) and rotates a substrate(15), and the flip device(110) can be provided between all unit(10a, 10b, 10c) and unit(10b, 10c, 10d), repeatedly rotating a substrate(15), and electrospinning polymer spinning solution in both sides of a substrate(15).

Meanwhile, as illustrated in FIG. 18 to FIG. 22, the flip device(110) is formed in "U" form, among each of the unit(10a, 10b, 10c, 10d), in the unit(10b) provided in middle, a substrate(15) rotated in 180° is carried to the unit(10c) overlapped to the unit(10b), and can be carried to the unit(10d) overlapped to the unit(10a) located in the front-end in criteria of side among each of the unit(10a, 10b, 10c, 10d). As described above, going through each unit(10a, 10b) of the electrospinning apparatus(1), a substrate(15) which polymer spinning solution is electrospun to the bottom and laminating formed a nanofiber web is located in the rear-end of the unit(10b), each formed in peripheral edge of both sides of a flip device(110) in "U" form in horizontal direction, and carried following right and left side guide member(111, 111') having guide groove(112, 112') for inserting and guiding both sides of the substrate(15), and the top and bottom location are reversed to bottom and top.

In this case, any one end of both ends of the substrate (15) is carried in upper direction following left side guide member(111) among guide member(111, 111') inwardly projected to peripheral edge of a flip device(110), again carried to lower direction, rotated in spiral form from peripheral edge of the flip device(110) and located in opposite location and direction to the initial location, another end of the substrate(15) is carried in lower direction following the right side guide member(111'), again carried to upper direction, rotated in spiral form from peripheral edge of the flip device(110), located in opposite side and direction to the initial location, and the substrate(15) inserted in each guide groove(112, 112') of guide member(111, 111') is guided to right and left guide member(111, 111'), and rotated in 180°.

According to the structure as described above, a substrate(15) going through each unit(10a, 10b) located in the front-end among each unit(10a, 10b, 10c, 10d) and electrospun polymer spinning solution on the bottom and laminating formed a nanofiber web is rotated in 180°, when going through each unit(10c, 10d) located in the rear-end, on top of the substrate(15) not electrospun, electrospinning polymer spinning solution, and laminating formed a nanofiber web.

In other words, according to the flip device(110), a substrate is rotated in 180°, going through units(10a, 10b) located in the front-end among each unit(10a, 10b, 10c, 10d), electrospinning polymer spinning solution on one side of the substrate(15), and laminating formed a nanofiber web, and going through units(10c, 10d) located in the rear-end among each unit(10a, 10b, 10c, 10d), electrospinning polymer spinning solution on one side of a substrate(15), laminating formed a nanofiber web, and laminating formed a nanofiber web on both sides of the substrate(15).

Meanwhile, as described above, the flip device(110) is formed in "U" form, located overlapped in criteria of units(10a, 10b) located in the front-end among each of the unit(10a, 10b, 10c, 10d) and units(10c, 10d) located in the rear-end, when installing the electrospinning apparatus(1), there is enough installation space, space use is easy, and nanofiber manufacture is possible by installing in narrow space. According to an embodiment of the present invention, the flip device(110) is provided between the unit(10b) and the unit(10c) located in middle among each unit(10a, 10b, 10c, 10d), comprising the substrate(15) to be rotated, and the flip device(110) is each provided between all unit(10a, 10b, 10c) and units(10b, 10c, 10d), repeatedly rotating the substrate(15), and electrospinning polymer spinning solution on both sides of the substrate(15).

Meanwhile, the substrate(15) going through the flip device(110) is rotated in 180° in the flip device(110), and simultaneously dried by a drying device(120) connected to the flip device(110). In other words, by the drying device(120) connected to the flip device(110), providing hot air or steam to the substrate(15), which provided to the flip device(110) and the both sides combined to guide groove(112, 112') of guide member(111, 111') and rotated in 180°, and evaporating solvent remained in a nanofiber web laminating formed to the substrate(15).

As described above, the flip device(110) is connected to the drying device(120), removing solvent remained in the substrate(15) which goes through units(10a, 10b) located in the front-end among each of the unit(10a, 10b, 10c, 10d) and electrospun polymer spinning solution on bottom and laminating formed a nanofiber web, again electrospinning polymer spinning solution through other units(10c, 10d) in the substrate(15) removed solvent, and laminating formed a nanofiber web, and through one manufacturing process, process such as electrospinning, rotation, and drying can be performed. Meanwhile, as illustrated in FIG. 23 to FIG. 26, in the case of the electrospinning apparatus(1) comprises units(10a, 10b, 10c, 10d) provided an electro-blown electrospinning apparatus and an electro-spinning electrospinning apparatus, a substrate(15) income and provided to a unit(10a) of the electrospinning apparatus(1) through the supply roller(3) is located on a collector(13) of an electro-blown electrospinning apparatus installed in the unit(10a), high voltage of voltage generators(14a, 14b, 14c, 14d) is generated on a collector(13), polymer spinning solution, which filled in a spinning solution main tank(8) in the substrate(15) on the collector generated high voltage, is electrospun through inner pipe of a nozzle(12) comprising double pipe form, and spinning compressed air through outer pipe provided in outer side and in form of covering the inner pipe.

Here, when electrospinning through a unit(10a) comprising the elctro-blown electrospinning apparatus, polymer spinning solution is electrospun from an inner pipe(12a) of a nozzle(12) comprising in double pipe form, and simultaneously compressed air is jetted from an outer pipe(12b), the polymer spinning solution and compressed air are simultaneously sprayed, and a nanofiber web of thick diameter is laminating formed on a substrate(15).

In addition, a substrate(15) going through a unit(10a) comprising the electro-blown electrospinning apparatus and laminating formed a nanofiber web of thick diameter is located in the rear-end, and provided to a unit(10b) comprising an electro-spinning electrospinning apparatus(not shown).

As described above, polymer spinning solution is electrospun from a nozzle(12) comprising in single pipe form on a substrate(15) provided to a unit(10b) comprising the electro-spinning electrospinning apparatus, and laminated a nanofiber web of relatively thin diameter. In other words, through a unit(10a) comprising the electro-blown electrospinning apparatus, a nanofiber web of thick diameter laminating formed, and on a nanofiber web of thick diameter laminating formed on a substrate(15), through a unit(10b) comprising an electro-spinning electrospinning apparatus, a nanofiber web of relatively thin diameter laminating formed in multi-layered.

As described above, through a unit(10a) comprising the electro-blown electrospinning apparatus, a nanofiber web of thick diameter laminating formed on a substrate(15), and through a unit(10b) comprising an electro-spinning electrospinning apparatus, after laminating formed a nanofiber web having relatively thin diameter on a nanofiber web having thick diameter, on a substrate(15) laminating formed multi-layered nanofiber web having thick diameter and thin diameter, again through a unit(10c) comprising an electro-blown electrospinning apparatus and through a unit(10d) comprising an electro-spinning electrospinning apparatus, laminating formed a nanofiber web having thick diameter and thin diameter, and alternately and repeatedly laminating a nanofiber web having thick diameter and a nanofiber web having thin diameter on a substrate(15).

In the present invention, each unit(10a, 10b, 10c, 10d) of the electrospinning apparatus(1), units(10a, 10c) comprising an electro-blown electrospinning apparatus and units(10b, 10d) comprising an electro-spinning electrospinning apparatus are rotated in order and repeatedly installed, and alternately and repeatedly laminated a nanofiber web of thick diameter and a nanofiber web of thin diameter on a substrate(15), in each unit(10a, 10b, 10c, 10d) of the electrospinning apparatus(1), units(10b, 10d) comprising an electro-spinning electrospinning apparatus and units(10a, 10c) comprising an electro-blown electrospinning apparatus are rotted in order and repeatedly installed, and can comprise laminated alternately and repeatedly of nanofiber web of thin diameter and nanofiber web of relatively thick diameter on the substrate(15).

Meanwhile, when the substrate(15) goes through the electrospinning apparatus(1) comprising units(10a, 10b, 10c, 10d) provided an electro-blown electrospinning apparatus and an electro-spinning electrospinning apparatus, the electro-blown electrospinning apparatus goes through the unit(10a), laminating formed a nanofiber web of thick diameter laminating formed on a substrate, when going through the unit(10b) installed the electro-spinning electrospinning apparatus, laminating formed a nanofiber web of thin diameter on a nanofiber web of thick diameter, again going through the unit(10c) installed the electro-blown electrospinning apparatus, laminating formed a nanofiber web of thick diameter on a nanofiber web of thin diameter, and the electro-spinning electrospinning goes through the unit(10d) installed, laminating formed a nanofiber web of thin diameter on a nanofiber web of thick diameter, and going through the thickness measuring device(70), thickness of nanofiber web laminating formed on the substrate(15).

Also, in the case of a flip device(110) in the electrospinning apparatus(1) comprising units(10a, 10b, 10c, 10d) provided the electro-blown electrospinning apparatus and the electro-spinning electrospinning apparatus, the substrate(15) goes through the unit(10a) installed the electro-blown electrospinning apparatus of the electrospinning apparatus (1) and goes through the unit(10b) installed the electro-spinning electrospinning apparatus, on bottom, a nanofiber web of thick diameter and a nanofiber web of thin diameter laminating formed in 2 layer, the substrate(15) is rotated in 180°, and when going through the unit(10c) installed the electro-blown electrospinning apparatus and going through the unit(10d) installed the electro-spinning electrospinning apparatus, polymer spinning solution is not electrospun, on top of the substrate(15) located in bottom by rotation, polymer spinning solution is electrospun, and laminating formed a nanofiber web.

In other words, the substrate (15) is rotated in 180° by the flip device (110), among each unit(10a, 10b, 10c, 10d) of the electrospinning apparatus(1), going through the unit(10a) installed an electro-blown electrospinning apparatus and going through the unit(10b) installed an electro-spinning electrospinning apparatus, on one side of the substrate, laminating formed a nanofiber web of thick diameter and a nanofiber web of thin diameter, again through the unit(10c) installed the electro-blown electrospinning apparatus and going through the unit(10d) installed the electro-spinning electrospinning apparatus, on another side of the substrate, laminating formed a nanofiber web of thick diameter and a nanofiber web of thin diameter, laminating a nanofiber web having thick diameter and thin diameter in multi-layered on both sides of the substrate, and repeatedly and alternately laminating formed a nanofiber web of thick diameter and thin diameter.

In the present invention, units(10a, 10b, 10c, 10d) of the electrospinning apparatus(1), units(10a, 10c) installed in an electro-blown electrospinning apparatus and units(10b, 10d) installed in an electro-spinning electrospinning apparatus are provided in order, and each of the unit(10a, 10b, 10c, 10d) can be provided in order of units(10b, 10d) installed an electro-spinning electrospinning apparatus and units(10a, 10c) installed an electro-blown electrospinning apparatus.

As described above, a substrate(15), which goes through each unit(10a, 10b, 10c, 10d) of the electrospinning apparatus(1) and polymer spinning solution is electrospun and laminating formed a nanofiber web on top and bottom, performs post-process such as laminating through a laminating device(90), and produces the final product.

Meanwhile, a substrate(15) laminated through the laminating device(90) measures permeability through the permeability measuring device(80), through each of the unit(10a, 10b, 10c, 10d), polymer spinning solution is electrospun on the substrate(15), and measures permeability of a nanofiber web electrospun polymer spinning solution and laminating formed a nanofiber web, and according to measuring value, feed speed of the substrate(15) and a nozzle block(11) are controlled, and permeability of a nanofiber web is adjusted.

In other words, in the case of permeability of nanofiber web laminating formed on a substrate(15) through each unit(10a, 10b, 10c), feed speed of the next unit(10b, 10c, 10d) is decreased, by adjusting voltage intensity of voltage generators(14a, 14b, 14c, 14d), increasing discharging amount per unit of a nozzle block(11), increasing laminating amount of polymer spinning solution on the substrate(15), and forms small permeability. Also, in the case of permeability of nanofiber web laminating formed on a substrate(15) through each unit(10a, 10b, 10c) is measured small, feed speed of the next unit(10b, 10c, 10d) is increased, by adjusting voltage intensity of voltage generators(14a, 14b, 14c, 14d), decreasing discharging amount per unit of a nozzle block(11), decreasing laminating amount of polymer spinning solution on the substrate(15), and forms large permeability.

As described above, after measuring permeability of a nanofiber web laminating formed on the substrate(15), by controlling feed speed of each unit(10a, 10b, 10c, 10d) according to measured permeability and a nozzle block(11), a nanofiber web having even permeability can be produced.

In the present invention, the electrospinning apparatus(1) comprises a bottom-up electrospinning apparatus, four units(10a, 10b, 10c, 10d) are consecutively provided, and in the rear-end of each unit(10a, 10b, 10c, 10d), a thickness measuring deivce(70) and a substrate feed speed adjusting device(30) are each provided, and between units(10b, 10c) located in middle, a flip device (110) is provided, and in the rear-end of each unit(10a, 10b, 10c, 10d), a laminating device(90) and a permeability measuring deivce(80) are provided, and the electrospinning apparatus(1) can comprise a bottom-up electrospinning apparatus, and number of units(10a, 10b, 10c, 10d) can comprise four or more or four or less, and between the unit(10a, 10b, 10c, 10d) and in the rear-end, a thickness measuring device(70), a substrate feed speed adjusting device(30), a flip device(110), a laminating device(90), and a permeability measuring device(80) are preferably provided any one or more.

In addition, in an embodiment of the present invention, the overflow device(200) and the VOC recycling device(300) are simultaneously provided in the electrospinning apparatus(1), and the overflow device(200) and the VOC recycling device can be individually provided.

While this invention has been described in connection with what is presently considered to be practical exemplary embodiments, it is to be understood that the invention is not limited to the disclosed embodiments, on the contrary, is intended to cover carious modifications and equivalent arrangements included within the spirit and scope of the appended claims.

## Claims

1. An electrospinning apparatus for production of nanofibers, comprising:
units are sequentially installed in several and comprising a spinning solution main tank which is provided filled polymer spinning solution, a nozzle block which is installed inside of a case for jetting polymer spinning solution filled in the spinning solution main tank and arranged and installed a plurality of nozzle in pin form for laminating forming nanofiber web on a substrate provided from outside, a collector separated in predetermined space from a nozzle for integrating polymer spinning solution jetted from nozzle of the nozzle block, a voltage generator generating voltage to the collector, and an auxiliary carry device for carrying a substrate; and
a flip device which is provided between units in middle among each unit and rotates a substrate carried from the front-end to the rear-end.

2. The electrospinning apparatus for production of nanofibers of claim 1, further comprising an overflow device including a spinning solution recovery path for retrieving overflowed polymer spinning solution from a nozzle block of each of the unit, a recycled tank connected to the spinning solution recovery path and stores retrieved polymer spinning solution, a middle tank connected to the recycled tank and a spinning solution main tank with a feed pipe and carrying polymer spinning solution, and
wherein polymer spinning solution is supplied from the middle tank to a nozzle block through a supply pipe.

3. The electrospinning apparatus for production of nanofibers of claim 1, further comprising a VOC recycling device including a condensation device for condensing and liquefying VOC generated from each of the unit, a distillation device which distills and liquefies VOC condensed and liquefied through the condensation device, and a storage device for storing solvent liquefied from a distillation device, and
wherein solvents in a storage tank which VOC liquefied and distilled from a distillation device is classified and stored reuse and recycle as polymer spinning solution.

4. The electrospinning apparatus for production of nanofibers of claim 1, wherein top of the case is formed with an electric insulator and the bottom of the case is formed with an electric conductor, and top and bottom of the case are mutually combined.

5. The electrospinning apparatus for production of nanofibers of claim 1, further comprising a thickness measuring device which is installed in the rear-end of each of the unit, measures thickness of nanofiber web jetted on a substrate carried by ultrasonic waves, adjusts feed speed of a substrate and voltage intensity of a voltage generator according to thickness of measured nanofiber web, and adjusts thickness of nanofiber web.

6. The electrospinning apparatus for production of nanofibers of claim 1, further comprising a permeability measuring device which is provided in the lowermost among each unit, measures permeability of nanofiber web jetted on a substrate by ultrasonic waves, adjusts feed speed of a substrate and voltage intensity of a voltage generator according to permeability of measured nanofiber web, and adjusts permeability of nanofiber web.

7. The electrospinning apparatus for production of nanofibers of claim 1, further comprising a substrate feed speed adjusting device including a buffer section formed between each of the unit, a pair of support roller supporting a substrate on the buffer section, and one or more adjusting roller which is installed movable up and down between a pair of the support roller and a substrate is wound on, and
wherein adjusts feed speed of a substrate according to vertical motion of each of the adjusting roller.

8. The electrospinning apparatus for production of nanofibers of claim 1, further comprising a temperature adjusting control device which is formed in spiral form to inner peripheral edge of each pipe of the nozzle block, formed in heating line form, and adjusts temperature of polymer spinning solution provided to a pipe.

9. The electrospinning apparatus for production of nanofibers of claim 1, wherein the flip device is cylindrical form having a hollow inside, is projected inwardly on both sides of inner peripheral edge, and includes right and left guide member having guide-groove for guided in spiral form and inserted both sides of a substrate.

10. The electrospinning apparatus for production of nanofibers of claim 1, wherein the flip device is formed approximately in "U" form, is formed in cylindrical form having a hollow inside, is projected inwardly to both sides of inner peripheral edge, and includes right and left guide member having guide-groove for guided in spiral form and inserted both sides of a substrate.

11. The electrospinning apparatus for production of nanofibers of claim 9 or claim 10, wherein among the right and left guide member, a left guide member is extended and formed in upper direction following inner peripheral edge, again is extended and formed in lower direction, and is extended and formed in spiral form to the initial direction of a right guide member, and the right guide member is extended and formed in lower direction following inner peripheral edge, again is extended and formed in upper direction, and is extended and formed in spiral form to the initial direction of the left guide member, and a substrate inserted to each of the right and left side guide groove is guided to right and left guide member and rotated in 180°, the bottom is located in top and the top is located in bottom.

12. The electrospinning apparatus for production of nanofibers of claim 1, wherein the flip device further comprising a drying device for supplying heat air, hot air, or steam.

13. The electrospinning apparatus for production of nanofibers of claim 1, wherein each of the units comprises a unit provided with an electro-blown electrospinning apparatus and a unit provided with electro-spinning electrospinning apparatus, and units comprising the electro-blown electrospinning apparatus and units comprising the electro-spinning electrospinning apparatus are sequentially and alternately installed each other.

14. The electrospinning apparatus for production of nanofibers of claim 13, wherein from inner pipe provided a plurality of pipes arranged and installed in a nozzle bock of unit comprising the electro-blown electrospinning apparatus, polymer spinning solution is electrospun, simultaneously compressed air is jetted from outer pipe provided in outer side, and from each nozzle of a plurality of pipe arranged and installed in nozzle block of a unit comprising the electro-spinning electrospinning apparatus, polymer spinning solution is electrospun.

15. The electrospinning apparatus for production of nanofibers of claim 1, wherein from each nozzle of a unit comprising an electro-blown electrospinning apparatus, a nanofiber web of thick diameter is laminated on the substrate, from each nozzle of a unit comprising the electro-spinning electrospinning apparatus, a nanofiber web of thin diameter laminated is laminated on nanofiber web of thick diameter, and the laminating process is alternately repeated.
